(19) Europäisches Patentamt
European Patent Office
Office européen des brevets

(11) **EP 4 044 097 A1**

(12) **EUROPEAN PATENT APPLICATION**

(43) Date of publication:
**17.08.2022 Bulletin 2022/33**

(21) Application number: **22157116.9**

(22) Date of filing: **16.02.2022**

(51) International Patent Classification (IPC):
**G06Q 30/02** (2012.01)     **G06N 20/00** (2019.01)

(52) Cooperative Patent Classification (CPC):
**G06Q 30/0201; G06N 20/00; G06Q 30/0282**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.02.2021 US 202117176271**
**03.05.2021 US 202117306397**
**26.10.2021 US 202117510656**

(71) Applicant: **RepTrak Holdings, Inc.**
**Boston, MA 02116 (US)**

(72) Inventors:
• **LITVAK-HINENZON, Anna**
**Boston, 02116 (US)**

• **ULF NIELSEN, Kasper**
**Boston, 02116 (US)**
• **WRIGHT-FORD, Kylie**
**Boston, 02116 (US)**
• **LAING, Andrew**
**Boston, 02116 (US)**
• **FOMBRUN, Charles**
**Boston, 02116 (US)**
• **HASELTINE, Mark**
**Boston, 02116 (US)**
• **GEORGES TRAD, Nicolas**
**Boston, 02116 (US)**
• **VAN RIEL, Cees**
**Boston, 02116 (US)**

(74) Representative: **Mewburn Ellis LLP**
**Aurora Building**
**Counterslip**
**Bristol BS1 6BX (GB)**

(54) **SYSTEM AND METHOD FOR DETERMINING AND MANAGING ENVIRONMENTAL, SOCIAL, AND GOVERNANCE (ESG) PERCEPTION OF ENTITIES AND INDUSTRIES THROUGH USE OF SURVEY AND MEDIA DATA**

(57)    A system and method for determining and managing reputation of an entity or industry includes determining a sample size of the population that provides at least a pre-defined percent confidence interval, and which has the predefined level of familiarity (unique group); determining a measure of likelihood that the targeted population will perform a positive action on behalf of an entity (behavioral connection score), wherein determining the measure of the likelihood that the targeted population will perform a positive action on behalf of an entity comprises: receiving survey ratings from behavioral connection survey questions where each survey rating is provided by a party within the unique group; weighting the received survey ratings to accommodate for at least one of the group consisting of cultural bias and missed demographic quotas; and aggregating the ratings within each individual question to provide a single aggregated behavioral connection score for each behavioral connection survey question.

**FIG. 1**

**Description**

**CROSS-REFERENCE TO RELATED APPLICATIONS**

This application is a continuation-in-part of U.S. Patent Application serial number 17/176,271, filed February 16, 2021, entitled "System and Method For Determining And Managing Reputation Of Entities And Industries," and a continuation-in-part of U.S. Patent Application serial number 17/306,397, filed May 3, 2021, entitled "System and Method For Determining and Managing Reputation of Entities and Industries Through Use Of Behavioral Connections," and a continuation-in-part of U.S. Patent Application serial number 17/510,656, filed October 26, 2021, entitled "System And Method For Determining And Managing Reputation Of Entities And Industries Through Use Of Media Data," of which each application is incorporated by reference herein in its entirety.

**FIELD OF THE INVENTION**

The present invention generally relates to effective determination of entity and industry reputations, and, more particularly, to systems and methods that provide realistic and accurate determination of the ability of an entity to deliver on stakeholder expectations through a measure of the likelihood that the entity's environmental, social, and governance (ESG) perception from a targeted population or the ESG perception as portrayed in media data about the entity will affect positively or negatively the reputation of an entity and the likelihood of the public to exhibit positive behaviors towards the entity.

**BACKGROUND OF THE INVENTION**

It is vital for companies, brands, and corporations to manage their reputation. The reputation of a corporation is a measure of how society views the corporation and provides a good measure of public expectation that the corporation has the basic ability to fulfill the expectations of a current or potential consumer. Reputation of a corporation bears weight on a number of important factors. For example, a strong reputation of a corporation will increase chances of obtaining and maintaining a loyal customer base, resulting in increased sales and being able to charge a premium for items sold. Strong corporate reputation also allows for a stronger current and potential employee pool. A strong reputation also increases chances that a potential purchaser will commit to a purchase, and a potential investor will commit to an investment. In recent years, ESG, which stands for Environmental, Social, Governance as an industry standard acronym, became a crucial part of perception of a reputation of entities, corporations, brands, and industries. In particular, ESG became a crucial measurement for investors, customers, and talent acquisition and retention personnel.

Reputation is especially important in e-commerce, where products are being purchased online and the benefit of face to face encounter and interaction is uncommon. In addition, the e-commerce world removes the personal brick and mortar experience, making interaction during purchasing less personal, thereby making reputation even more important since live interaction cannot be relied upon to entice current and potential customers.

Both reputation and ESG determination currently are inaccurately measured, using unrealizable data that tends to be biased and self-serving. A more reliable system and method is required to be provided for accurately measuring and managing reputation and ESG of entities and industries so as to allow for adjustment to improve reputation overall, and in particular through ESG perception and sentiment, thereby benefitting the entity, as well as enhancing consumer experience and attractiveness to investors.

**SUMMARY OF THE INVENTION**

Embodiments of the present invention provide a system and method for determining and managing entity or industry reputation through monitoring ESG perception and sentiment. Briefly described, the method includes determining a sample size of population that is demographically representative of a desired survey population and which provides at least a pre-defined percent confidence interval, where those within the sample size have a predefined level of familiarity with the entity, and wherein this sample size which provides at least a pre-defined percent confidence interval, and which has the predefined level of familiarity, is referred to herein as a unique group; determining ESG perception metrics based on the targeted population; determining ESG perception metrics based on at least one media data source; determining a measure of the likelihood that the targeted population will perform a positive action on behalf of an entity, referred to as a behavioral connection score, wherein determining the measure of the likelihood that the targeted population will perform a positive action on behalf of an entity comprises the steps of: receiving survey ratings from behavioral connection survey questions where each survey rating is provided by a party within the unique group; weighting the received survey ratings to accommodate for at least one of the group consisting of cultural bias and missed demographic quotas; and aggregating the converted and weighted received ratings within each individual question to provide a single aggregated behavioral connection score for each behavioral connection survey question.

In accordance with a further exemplary embodiment of the invention, a method for prioritizing the ESG perception components scores and the ESG perception factors scores as predictors of the measure of likelihood that a targeted population will perform a positive action on behalf of an entity, referred to as a behavioral connection score, is provided, comprising the steps of: using one or more regression machine learning models and determined ESG components perception scores, or ESG perception factor scores, used as input variables, wherein each behavioral connection business outcome score is used as a dependent variable, where ESG perception scores measure the level of how those within the unique group perceive the environmental impact, social responsibility and governance standards of the entity; storing the obtained set of ESG perception scores, the obtained business outcomes scores, and the prioritization weights for the ESG perception components and factors per each supportive behavior (business outcome).

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

## BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principals of the invention.

FIG. 1 is a schematic illustration of a network in which the present system and method may be provided.

FIG. 2 is a schematic diagram further illustrating the reputation server of FIG. 1 in accordance with one exemplary embodiment of the invention.

FIG. 3 is a schematic diagram further illustrating modules within the memory of FIG. 2 that are used to perform functionality of the reputation server in accordance with the present invention

FIG. 4 is a flowchart exemplifying steps taken in accordance with the present system and method in determining and managing reputations and ESG perceptions of entities and industries.

FIG. 5 is a flowchart further illustrating steps taken in obtaining the data and cleaning the data.

FIG. 6 is a flowchart further illustrating steps taken in generating an ESG perception model.

FIG. 7 is a flowchart further illustrating steps taken by the ESG perception score module in calculating the ESG factor scores.

FIG. 8 is a flowchart further illustrating steps taken in obtaining a final ESG perception score, the ESG perception component scores of E (environmental), S (social), and G (governance), and the ESG perception aggregated factor scores.

FIG. 9 is a flowchart illustrating steps taken in deriving the behavioral connection score associated with the entity for which ESG perception is to be measured, and prioritizing the importance of ESG perception components and ESG perception factors as contributing to each behavioral connection.

FIG. 10 is a flowchart further illustrating the process of generating the ESG perception model from media data and deriving media ESG score and media ESG component scores.

FIG. 11 is a flowchart illustrating steps taken by the present media data management model for purposes of determining weighted ESG component perception scores and an aggregated weighted ESG perception score for an entity through use of at least one media data source.

FIG. 12 is a flowchart further illustrating the step of the NLP model being trained.

FIG. 13 is a flowchart further illustrating the step of performing data annotation for sentiment classification.

FIG. 14 is a flowchart illustrating the step of calculating, weighting, and storing ESG perception scores from media data.

## DETAILED DESCRIPTION

The present system and method provides a reliable measure of ESG perception and sentiment metrics for managing reputation of an entity or industry, and allows for reputation management in a manner that is most efficient, where specific adjustments that would be most effective toward increasing the ESG perception or sentiment as related to the entity are highlighted so as to provide the entity or industry with guidance for improving their ESG perception or sentiments as part of improving their reputation management. It should be noted that an entity may be any of, but not limited to, a corporation, company, individual, or a group of individuals functioning under one name or label, a brand, a group of brands, an industry or a group of industries, or a market.

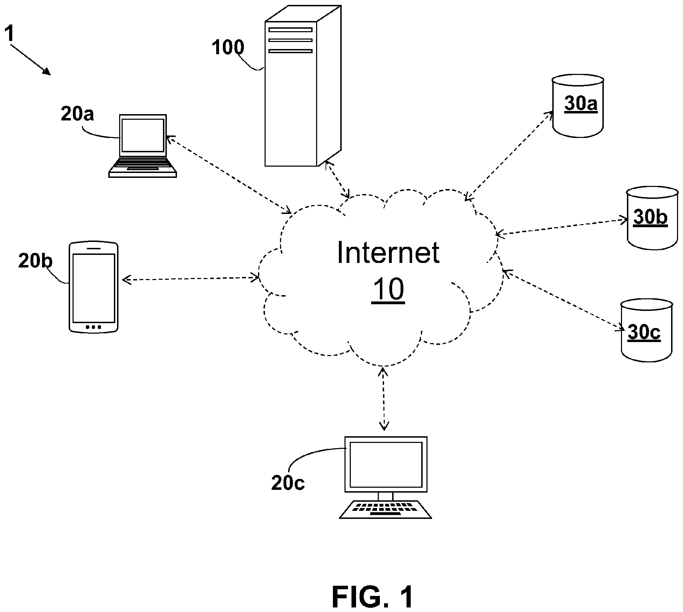

The present system and method may be provided in the network 1 illustrated by the schematic diagram of FIG. 1. A reputation server 100 may contain a reputation engine therein, for defining functionality performed by the present reputation determining and managing system and method, as will be described in detail herein. A consumer interacting with the present system and method can communicate with the reputation server 100 via the internet through use of a user device such as, but not limited to a laptop 20a, a cell phone 20b, or a desktop computer 20c. Such devices 20a-20c allow a user to interact with the reputation server 100 through use of a graphical user interface or other method that will allow a user to sign into the reputation server 100, enter necessary information and retrieve requested information, such as a reputation score, driver scores, and weights of driver scores, through, for example, a web site, or directly through interaction with a software application stored on the user device 20a-20c, or by other means. Information retrieved from and provided to the reputation server 100 will be described in additional detail herein. It should be noted that the user device 20 may be a different device, such as, but not limited to, an i-pad, smart watch, or other device.

As shown by FIG. 1, one or more database 30a-30c may be provided for storing data from and/or providing data to the reputation server 100, as described herein. While three databases are illustrated by FIG. 1, one having ordinary skill in the art will appreciate that fewer or more databases may be provided. It will also be appreciated that such remote storage may be cloud storage or another form of remote storage.

Functionality as performed by the present reputation assessment and management system and method is defined by modules within the reputation server 100. The modules may be provided together as a reputation engine consisting of the modules, or in multiple locations within a single or more than one machine. For example, in hardware, the functionality of the modules can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc. The modules can also be provided as software modules of a reputation engine, where the reputation engine comprises a processor and a memory having software modules therein defining functionality to be performed by the present system and method.

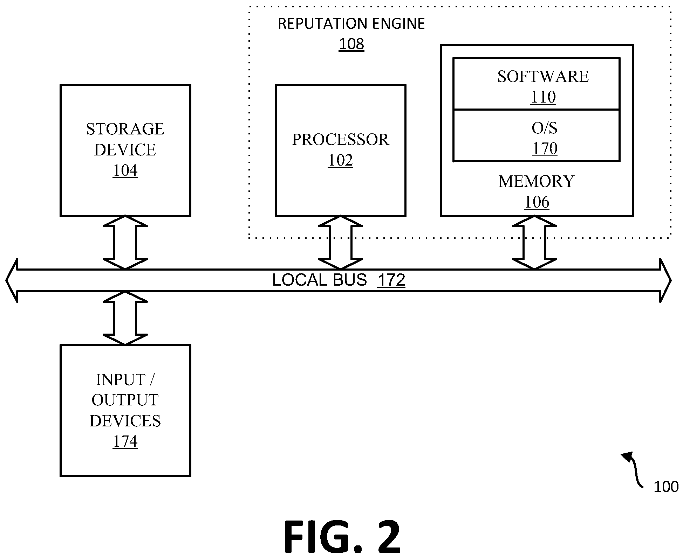

Referring to an embodiment where the reputation engine comprises a memory having software modules therein defining functionality to be performed by the present system and method, as shown by FIG. 2, the reputation server 100 contains a processor 102, a local storage device 104, a memory 106 having software 110 stored therein that defines the reputation engine functionality, input and output (I/O) devices 174 (or peripherals), and a local bus, or local interface 172 allowing for communication within the reputation server 100. The combination of the processor 102 and the memory 106 may also be referred to as the reputation engine 108. The local interface 172 can be, for example but not limited to, one or more buses or other wired or wireless connections, as is known in the art. The local interface 172 may have additional elements, which are omitted for simplicity, such as controllers, buffers (caches), drivers, repeaters, and receivers, to enable communications. Further, the local interface 172 may include address, control, and/or data connections to enable appropriate communications among the aforementioned components.

The processor 102 is a hardware device for executing software, particularly that stored in the memory 106. The processor 102 can be any custom made or commercially available single core or multi-core processor, a central processing unit (CPU), a Graphics processing unit (GPU), an auxiliary processor among several processors associated with the present reputation server 100, a semiconductor-based microprocessor (in the form of a microchip or chip set), a microprocessor, or generally any device for executing software instructions.

The memory 106 can include any one or combination of volatile memory elements (e.g., random access memory (RAM, such as DRAM, SRAM, SDRAM, etc.) and nonvolatile memory elements (e.g., ROM, hard drive, tape, CDROM, etc.). Moreover, the memory 106 may incorporate electronic, magnetic, optical, and/or other types of storage media. Note that the memory 106 can have a distributed architecture, where various components are situated remotely from one another, but can be accessed by the processor 102.

The software 110 defines functionality performed by the reputation 100, in accordance with the present invention. The software 110 in the memory 106 may include one or more separate programs, each of which contains an ordered listing of executable instructions for implementing logical functions of the reputation server 100, as described below. The memory 106 may contain an operating system (O/S) 165. The operating system 165 essentially controls the execution of programs within the reputation server 100 and provides scheduling, input-output control, file and data management, memory management, and communication control and related services.

The I/O devices 174 may include input devices, for example but not limited to, a keyboard, mouse, scanner, microphone, etc. Furthermore, the I/O devices 174 may also include output devices, for example but not limited to, a printer, display, etc. Finally, the I/O devices 174 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the reputation server 100 is in operation, the processor 102 is configured to execute the software 110 stored within the memory 106, to communicate data to and from the memory 106, and to generally control operations of the reputation server 100 pursuant to the software 110.

When the functionality of the reputation server 100 is in operation, the processor 102 is configured to execute the software 110 stored within the memory 106, to communicate data to and from the memory 106, and to generally control operations of the reputation server 100 pursuant to the software 110. The operating system 165 is read by the processor 102, perhaps buffered within the processor 102, and then executed.

When functionality of the reputation server 100 is implemented in software 110, as defined by software modules within the memory 106, as will be described herein, it should be noted that instructions for implementing the reputation server 100 can be stored on any computer-readable medium for use by or in connection with any computer-related device, system, or method. Such a computer-readable medium may, in some embodiments, correspond to either or both the memory 106 or the storage device 104. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 102 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

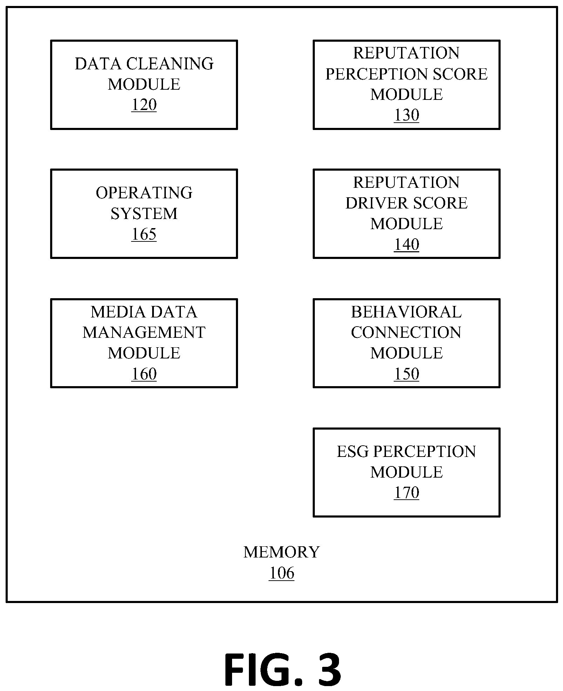

FIG. 3 is a schematic diagram further illustrating modules within the memory 106 of FIG. 2 that are used to perform functionality of the reputation server 100 in accordance with the present invention. As shown by FIG. 3, the reputation server 100 contains a data cleaning module 120, a reputation perception score module 130, a reputation driver score module 140, a behavioral connection module 150, a media data management module 160, and an ESG perception module 170. These modules work together to provide ESG perception and sentiment metrics determination, and reputation management as is to be described herein.

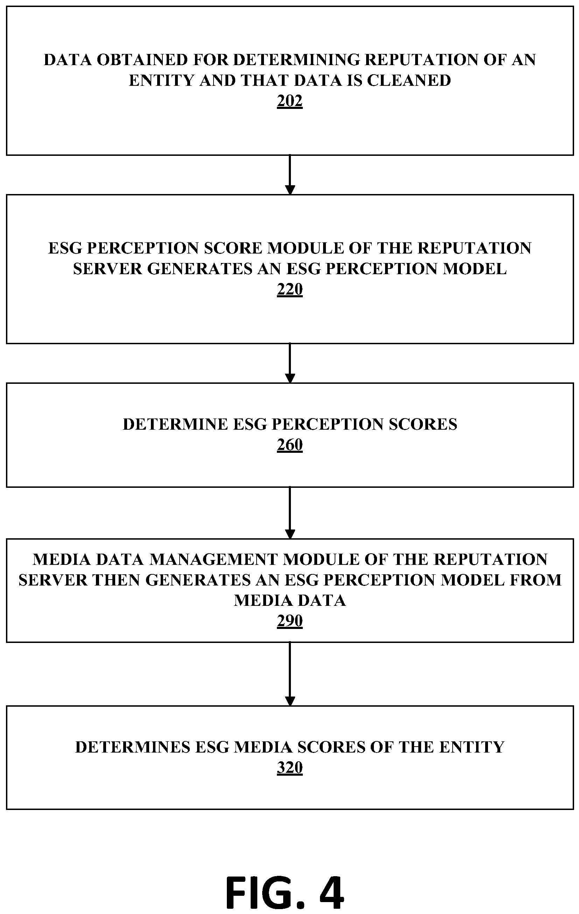

FIG. 4 is a flowchart exemplifying steps taken in accordance with the present system and method in determining and managing reputations of entities and industries using ESG perception and media ESG perception. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

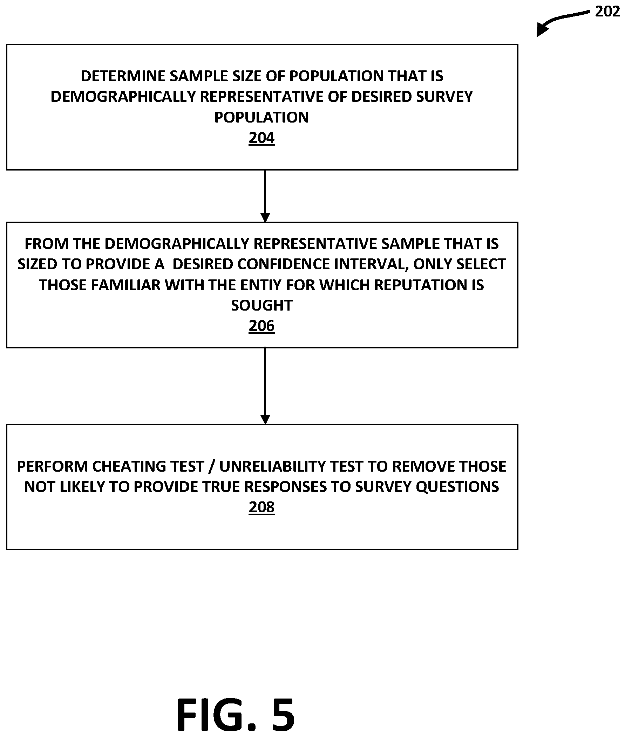

As shown by block 202, data is obtained for determining reputation of an entity and that data is cleaned. FIG. 5 is a flowchart further illustrating steps taken in obtaining the data and cleaning the data. Referring to FIG. 5, the present method begins with the gathering of survey data from stakeholders. The stakeholders could be, for example, but not limited to, an informed general public, influences, investors, customers, employees, information technology (IT) decision makers, or others. As shown by block 204 a sample size of individuals necessary for the survey is determined. The sample size of the population that is to be used is to be demographically representative of a desired size of the population for which the survey is sought. For example, if the population to be surveyed comprises forty percent males and sixty percent females, as well as twenty percent aged between fifteen and twenty-one, thirty percent aged between twenty-two and thirty-five, and fifty percent aged between thirty-six and fifty, the sample size for surveying would have the same or extremely close to these percentages so as to have a demographically representative sample group. It should be noted that certain categories of stakeholders may not fall into a spread out demographic, but instead, may have a specific structure. For example, it may be that it is typical for the gender of doctors with a specific focus to be eighty percent female. In such circumstances, the demographic representation should be eighty percent female and twenty percent male.

The size, or number, of individuals surveyed is determined using a known statistical formula, resulting in obtaining a ninety-five percent or better confidence interval. This means that the difference between the survey results of the populations sought, and the survey results of the demographically representative smaller sized survey group is a maximum of around five percent. One having ordinary skill in the art would appreciate that a lower confidence interval may be used, however, it has been determined that a ninety-five percent or better confidence interval is ideal to provide the data beneficial to obtaining highly accurate ESG perception determination for Reputation management. The result of this step is a demographically representative sample that is sized to provide a ninety-five percent or better confidence interval.

As shown by block 206, a determination is then made to ensure that those to be surveyed have a predefined level of familiarity with the entity for which reputation determination is sought. ESG perception determination for reputation determination and management is more accurate when only those with at least the predefined level of familiarity with the entity itself are surveyed. Only respondents that pass a pre-defined threshold of familiarity are considered in the rating. For example, familiarity can be assessed on a scale of one to seven, and only those familiar at level of four and up are considered. From the familiarity score, the present system and method can also provide the entity with an awareness score for their reference and reputation management. The level of familiarity of those to be surveyed may be determined by asking questions that are specific to the entity for which the ESG perception determination for reputation management is sought.

Since a surveyed person could potentially lie about their level of familiarity with an entity, a screening for unreliability test, is performed to flush out those likely to lie or exaggerate about their familiarity with an entity associated with the survey questions (block 208). For example, a questionnaire can be sent that lists corporations that do not exist and requesting a familiarity level from the receiver of the survey. If the individual surveyed claims to be familiar with one or more corporation that does not exist, the responder may be considered to be unreliable and they would then be removed from the demographically representative sample that is sized to provide a ninety-five or greater confidence interval.

The previously mentioned data cleaning steps of FIG. 5 result in a highly reliable demographically representative sample of a survey population that is sized to provide a ninety-five percent or greater confidence interval, from people who are familiar with the surveyed entity. It should be noted that while the present description is provided with regard to determining a highly accurate ESG perception of an entity, this process that is being described herein may instead be applied for a specific brand, group of brands, a corporation, industry, an individual or a leader, a group of individuals or of leaders, or even a country.

Returning to FIG. 4, after the data cleaning module 120 performs the data cleaning step (block 202), the ESG perception score module 170 of the reputation server 100 generates an ESG perception model (block 220) after which ESG perception scores are determined (block 260). ESG stands for Environmental, Social, Governance, where the Environmental, Social, and Governance components are a subset of non-financial performance indicators which include sustainable, ethical, fair, and responsible behavior and governing of the entity. The ESG perception score is a measure of a perception of a stakeholder, such as the general public, to be surveyed, regarding an impact of the entity on the environment, social responsibility of the entity to its stakeholders, employees, and the communities in which it operates, and governance standards of the entity. Inquiries that may determine a population's impression regarding impact of the entity on the environment may fall into different groups, such as, but not limited to, questions to determine whether the population believes that the entity reduces environmental footprint, whether the entity protects the environment, whether the entity has a positive influence through environmental actions, and whether the entity takes actions to fight climate change. Examples of groups of inquiries that may determine a population's impression regarding social responsibility of the entity may include questions to determine whether the population believes that the entity improves the lives of people, whether the entity cares for its employees, whether the entity offers equal opportunities, and whether the entity has a positive influence on society. Examples of groups of inquiries that may determine a population's impression regarding governance standards of the entity may include questions to determine whether the population believes that the entity makes positive economic contributions to society, whether the entity follows ethical and fair business practices, whether the entity maintains transparency in its operations and supply chain, and whether the entity maintains internal controls and audits such as of its leadership, executive pay, and its general conduct. It is to be noted that the examples of groups of inquiries are merely provided for exemplary purposes and are not intended to be limitations to the present invention.

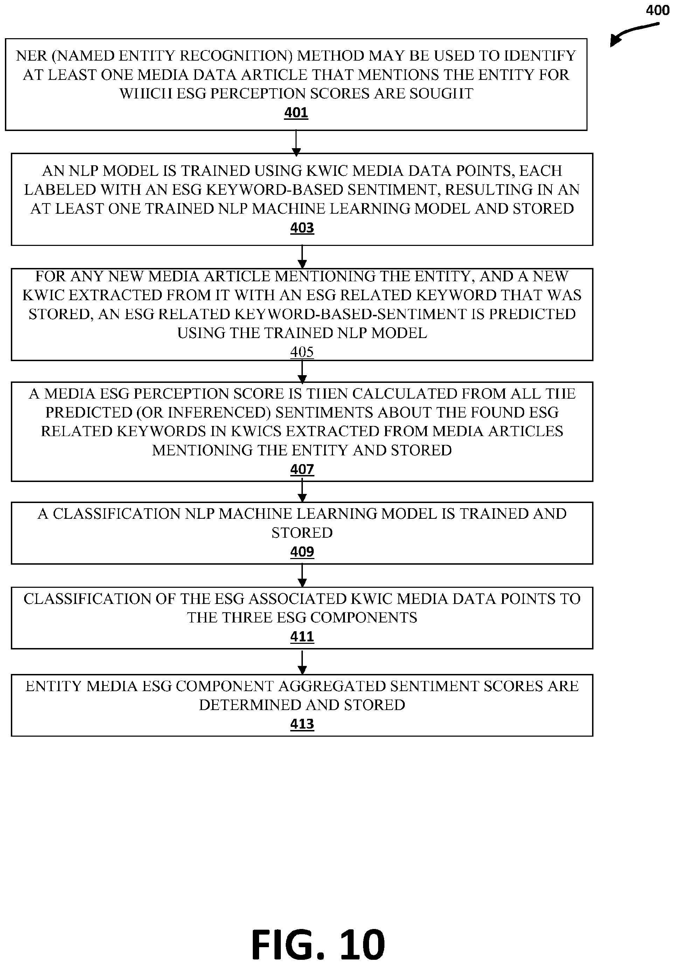

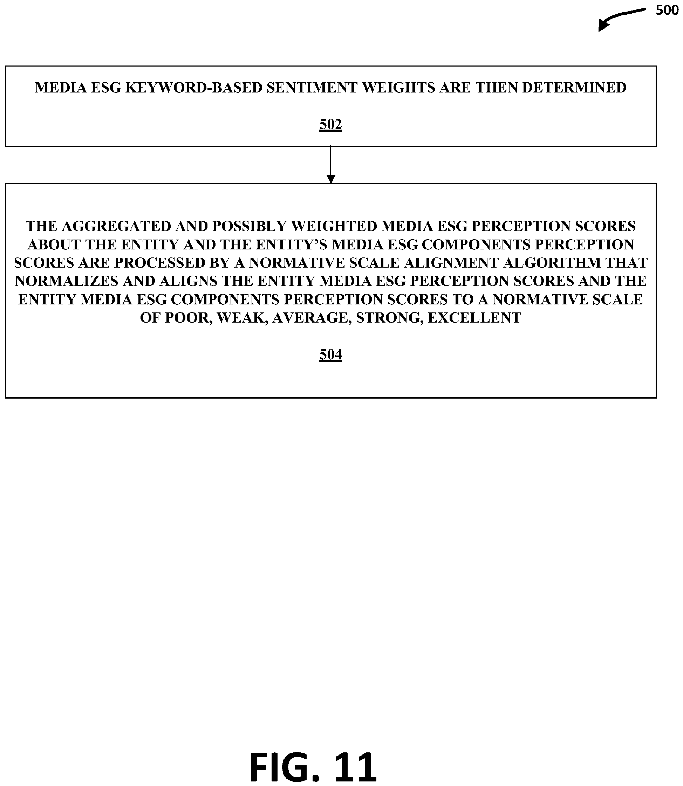

As shown by block 290, the media data management module 160 of the reputation server 100 then generates an ESG perception model from media data, after which it determines ESG media scores of the entity (block 320). FIG. 10 is a flowchart further illustrating the process of generating the ESG perception model and FIG. 11 is a flowchart further illustrating the process of determining ESG media scores of the entity. Both FIGS. 10 and 11 will be described in detail herein.

GENERATING ESG PERCEPTION MODEL

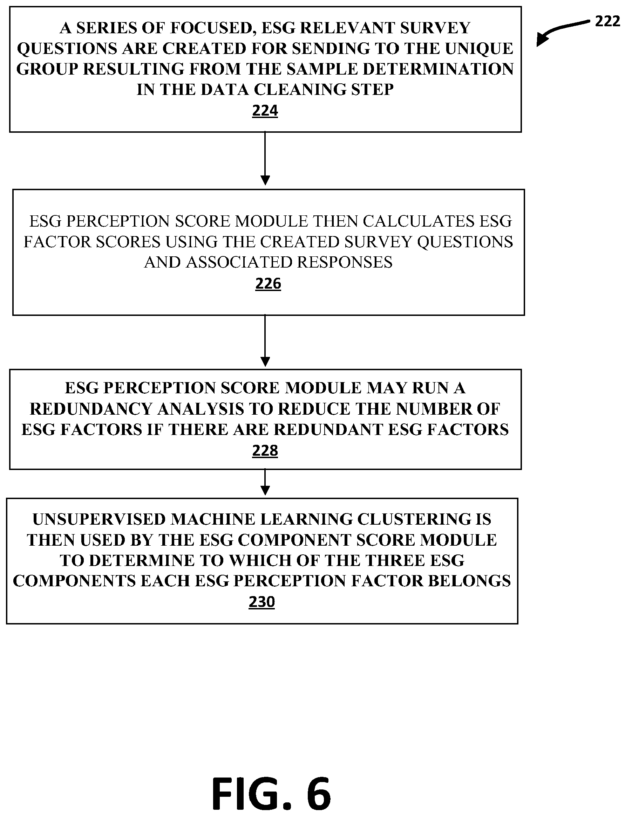

FIG. 6 is a flowchart 222 further illustrating steps taken in generating an ESG perception model (block 220). Referring to FIG. 6, a series of focused, ESG relevant survey questions are created for sending to the unique group resulting from the sample determination in the data cleaning step (hereafter, referred to as the "unique group") (block 224). The ESG relevant survey questions, also referred to herein as ESG factors, are designed to determine the opinion of members within the unique group regarding impact of the entity on the environment, social responsibility of the entity, and governance standards of the entity. Each survey question falls into one of the three categories of environmental (E), social (S), and governance (G). It is noted that it may be possible for a survey question to fall within more than one of the three categories.

It is to be recalled that the unique group is the result of the data cleaning step, so that survey answers from the unique group are extremely similar to what would be returned by an entire desired population. More specifically, if a unique group is two thousand individuals, survey results from that unique group would be extremely similar, if not the same as that which would have been received if an entire population of one million people for which the survey was intended, were in fact surveyed.

The survey questions may have, for example, a one to seven Likert scale, where a one signifies a low positive impact and a seven signifies a high positive impact of the entity. It is to be noted that a one to seven scale is not required. Instead, a different scale may be used, as long as a determination of the opinion of the questioned individual is made. In addition, as previously mentioned, the ESG survey questions transmitted fall into one of three categories, as previously mentioned, also referred to herein as ESG components, E, S, and G. Therefore, the three ESG components include, impact of the entity on the environment (E), social responsibility of the entity (S), and governance standards of the entity (G).

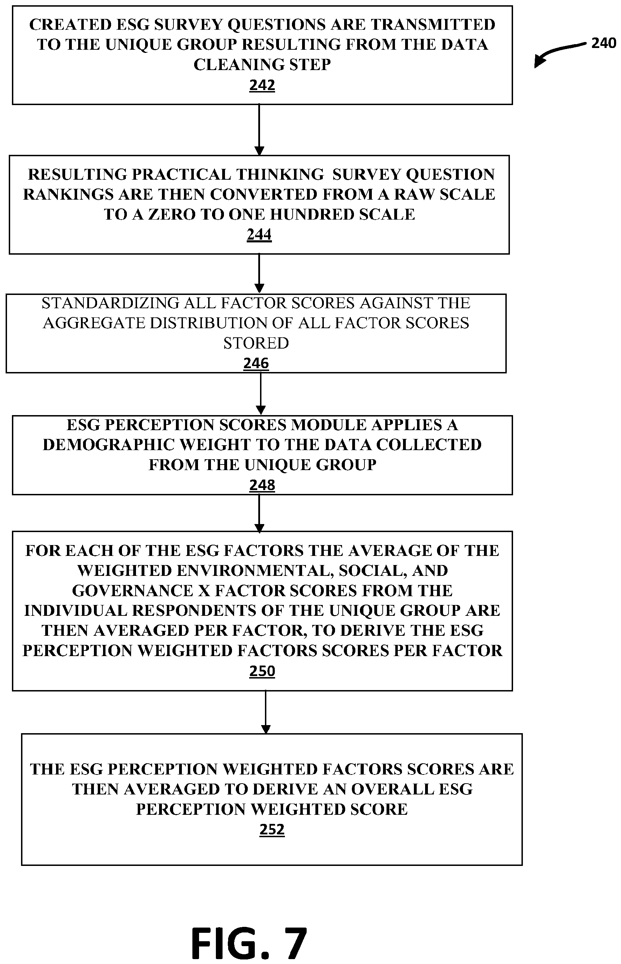

As shown by block 226, the ESG perception score module 170 then calculates ESG factor scores using the created survey questions and associated responses. FIG. 7 is a flowchart 240 further illustrating steps taken by the ESG perception score module 170 in calculating the ESG factor scores.

Referring to FIG. 7, as shown by block 242, the created ESG survey questions are transmitted to the unique group resulting from the data cleaning step. As previously mentioned, each ESG survey question is also referred to as a factor. For exemplary purposes, it is assumed that there are twenty ESG survey questions. It is noted, however, that there may be more or fewer such ESG survey questions, depending upon a level of granularity needed to address aspects of ESG components desired.

After return of the ESG survey questions, the result of this step is X number of returned responses for each ESG survey question or factor, where X is the number of individuals within the unique group. Therefore, if there are two-thousand individuals within the unique group (the highly reliable demographically representative sample of a survey population that is sized to provide a ninety-five percent or greater confidence interval, from people who are familiar with the surveyed entity), then assuming that all who received the ESG survey questions responded with ratings, there will be two-thousand responses for each ESG survey question, also referred to herein as the resulting ESG survey question rating. The resulting ESG survey question ratings/answers may be stored within the reputation server 100 storage device 104, or within one of the other databases 30a, 30b, 30c within the network 1. Such surveys may be conducted, for example, as a one-off, periodically, or continuously.

CONVERT to 1 - 100

As shown by block 244, each of the resulting ESG survey question ratings returned are then converted by the reputation engine 108 from a raw scale of one to seven, to a zero to one hundred scale, to provide a rescaled score for each resulting ESG survey question rating returned. This process may be performed by using an equation such as, but not limited to, the following equation 1.

$$\text{Rescaled Score} = ((\text{Raw Score-1}) / 6) \times 100 \qquad (\text{Eq. 1})$$

The result of this step, assuming that everyone in the unique group responded, is X number of factor scores for each environmental (E) ESG survey question (environmental factor), X number of factor scores for each social (S) ESG survey question (social responsibility factor), and X number of factor scores for each governance (G) ESG survey question (governance standards factor), where X is the number of individuals within the unique group. Each of the factor scores may then be stored within the reputation server 100 storage device 104, or within one of the other databases 30a, 30b, 30c within the network 1.

To further elaborate, if there are two-thousand unique individuals and there are twenty environmental factors, twenty social responsibility factors, and twenty governance standards factors, each individual within the unique group would receive twenty environmental ESG survey questions, twenty social responsibility ESG survey questions, and twenty governance standards ESG survey questions.

WEIGHING - CULTURAL BIAS

To ensure high accuracy in the final determined reputation and ESG perception of the reputation server 100, the present system and method overcomes "cultural bias" in the data by standardizing all factor scores against the aggregate distribution of all factor scores stored (block 246). A standardization formula is applied in each market to ensure that factor scores are comparable across different markets, where different weights are applied to specific data based on the specific market. A "market" may be considered a specific geographical region, for example, a country, or a smaller or larger geographical region. The standardization formula takes into account a country mean and a country standard deviation, and a global mean and a global standard deviation across all market measured, to normalize that which may have been skewed merely as a product of cultural pride or regional bias in general.

The standardized formula may include the following equations 2 and 3.

$$ZScore = \frac{(Rescaled\ Score - Country\ Mean)}{Country\ Standard\ Deviation} \qquad \text{(Eq. 2)}$$

$$Standardized\ Score = (ZScore * Global\ Std.Dev.) + Global\ Mean \qquad \text{(Eq. 3)}$$

In equation 2 the country mean is the unweighted average score in the region. Preferably, the country mean is calculated periodically (e.g., every year, or every three years) from historical data of raw scores on the respondent level in each country. In addition, the country standard deviation represents the variability of scores among the respondents. Preferably, the country standard deviation is calculated periodically (e.g., every year, or every three years) from historical data of raw scores on the respondent level in each country. Preferably, the country mean and country standard deviation should be recalculated for a market, or region, within a predefined time period, for example, but not limited to, every three years, as previously mentioned, although it need not be every three years. This will ensure a high level of accuracy in the determined reputation scores and ESG perception scores of the present system and method.

One having ordinary skill in the art would appreciate that while an example of a "market" has been provided as being a geographical region, a different measurable grouping may be used and the present invention is not intended to be limited to markets only being geographical regions. It is also noted that it may not be necessary to culturally weight the factor scores, in which case, this step is not included.

WEIGHING - DEMOGRAPHIC

During data collection from the unique group it is also beneficial to hit demographically representative quotas. As an example, common demographic groups that are targeted to ensure a market demographic representative sample for surveying may include age and gender. Unfortunately, during data collection it is not always possible to hit target demographic quotas exactly. As an example, a target demographic quota may be sixty percent women and forty percent men, however, a resulting highly reliable demographically representative sample of a survey population that is sized to provide a ninety-five percent or greater confidence interval, from people who are familiar with the surveyed entity (*i.e.*, unique group) may not comprise sixty percent women. In these cases, the ESG perception scores module 170 applies a demographic weight to the data collected from the unique group, where the demographic weight is dependent upon the actual unique group itself, so as to ensure that the unique group results are representative of the population targeted (block 248). If the unique group is representative of the population targeted, then no demographic weight is applied.

Also, in accordance with one exemplary embodiment of the invention, a RIM (random iterative method) weighting algorithm may be used to demographically weigh, and therefore match, the returned sample of the unique group, which may have already been culturally weighted, to the demographics of the population to which the study is intended. The algorithm is repeatedly applied to the data until the demographic weight converges. It is noted that a RIM weighting method allows a more precise analysis than a proportional weighting approach, although either method may be used, as well as other weighting methods known to those having ordinary skill in the art.

In accordance with an alternative embodiment of the invention, it should be noted that other weighting of data may be performed to account for other biases, such as, but not limited to, a data sources weighing. This would be beneficial when it is known that a specific data source tends to have a more positively biased or negatively biased audience that is used for surveying. Data source weighting takes this into account and applies a weight based on the source so as to normalize results.

It is also noted that it may not be necessary to weight demographically, culturally, by data source, or other weighting of the ESG perception scores, in which case, all or part of the weighting steps are not included.

The results after the weighting steps (blocks 246 and 248) are X number of rescaled, from zero to one hundred, environmental survey question returned ratings, social survey question returned ratings, and governance survey question returned ratings, each of which has been weighted for cultural bias and demographic bias, for each of the ESG factors, where X is the number of individuals within the unique group. These results are also referred to herein as weighted ESG perception factors scores.

As shown by block 250, for each of the ESG factors (for example 20) the average of the weighted environmental, social, and governance X factor scores from the individual respondents of the unique group are then averaged per factor (for example 20 factors), to derive the ESG perception weighted factors scores per factor. After performing this process, if for example there are twenty ESG perception factors, then twenty ESG perception weighted factor scores are obtained. Finally, the ESG perception weighted factors scores (for example 20) are then averaged to derive an overall ESG perception weighted score (block 252).

REDUNDANCY FOR ESG MODEL CONSTRUCTION & PERIODIC MODEL UPDATES

Referring to FIG. 6, after calculating the overall average ESG factors scores (per factor), the ESG perception score module 170 may run a redundancy analysis to reduce the number of ESG factors if there are redundant ESG factors (block 228). Redundancy analysis is first run on the ESG factors to remove redundant factors and remove collinearity in the data. Specifically, it may be the case that in answering the ESG survey questions, surveyed parties may consider two or more of the survey questions to be the same. As one having ordinary skill in the art would appreciate, this could skew resulting data, and therefore, make the resulting derived ESG perception, reputation management, and guidance regarding reputation of the entity less accurate. It is also noted that occasionally it may simply be desirable to decrease the number of ESG survey questions asked. Knowing that there is redundancy in projected response would allow for removal of one or more questions. Therefore, such redundant ESG factors should be removed, as well as associated collinearity in the data. To do so, redundancy analysis (RDA) is run on the ESG factor scores. As part of this process the ESG factors are projected onto linearly independent unique components. This may result in less ESG factors than originally used. A redundancy analysis may be considered as an extension of the multiple linear regression method (MLR) that accounts for multiple response / multiple explanatory input variables and is considered a common method in multivariate statistics. RDA may be performed, for example, by a dimensionality reduction method such as correspondence analysis (CA), discriminant analysis (DA), a canonical version of the principal component analysis (PCA), or non-metric multidimensional scaling (NMDS). Since one having ordinary skill in the art would know how to perform redundancy analysis (RDA), further description is not provided herein.

It is noted that redundancy analysis may be required only at an early stage of model construction and/or periodically for model updates, and it may not be necessary to perform a redundancy analysis at all, or every time that ESG perception factor scores are derived, and in such cases the redundancy analysis step is skipped.

ML CLUSTERING FOR ESG MODEL CONSTRUCTION & PERIODIC UPDATES

As shown by block 230, unsupervised machine learning clustering is then used by the ESG component score module 155 (FIG. 3) to determine to which of the three ESG components each ESG perception factor belongs, thereby dividing each of the remaining ESG factors after the redundancy analysis step into one of the ESG components, E, S, or G. The process of clustering the ESG factors with unsupervised machine learning into the ESG components may be performed by using, for example, principal component analysis (PCA), where the number of components is the number of ESG components (3) and the result is the number of ESG factors per each of the three ESG components (E, S, G). PCA is just an example of an unsupervised machine learning clustering method that may be used in such an implementation, and other clustering methods such as hierarchical clustering, K-Means, or others, may also be used. The result of the unsupervised machine learning clustering is the number of remaining ESG factors broken into each one of the ESG components, therefore, each ESG component will have a series of ESG factors assigned thereto. For example, if there were twenty ESG factors initially, and after the redundancy analysis step eighteen factors were determined as non-redundant and remained as part of the ESG perception factors, and there are three ESG components, the eighteen ESG factors are broken into the three ESG components so that each ESG factor is uniquely assigned to an ESG component, resulting in, for example, the first ESG component having seven ESG factors, the second ESG component having five ESG factors, and the third ESG component having six ESG factors.

It is noted that the unsupervised machine learning clustering may be required only at an early stage of model construction and/or periodically for model updates, and it is usually not necessary to perform an unsupervised machine learning clustering every time that ESG perception factor scores are derived, and in such cases the unsupervised machine learning clustering step is skipped.

OBTAINING ESG PERCEPTION SCORES (factors, components and final ESG score)

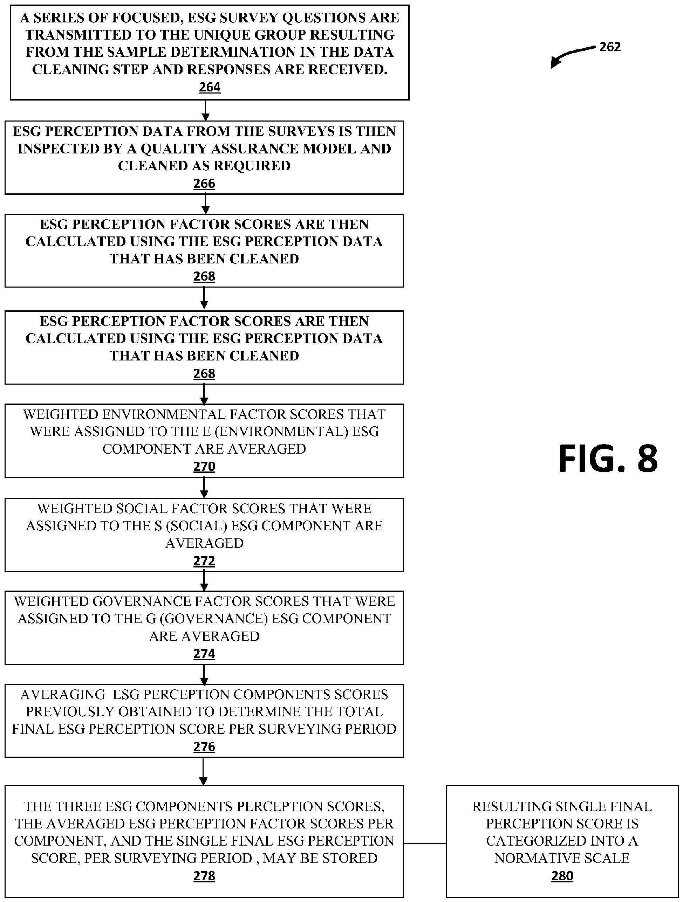

FIG. 8 is a flowchart 262 further illustrating steps taken in obtaining a final ESG perception score, the ESG perception component scores of E (environmental), S (social), and G (environmental), and the ESG perception aggregated factor scores. Referring to FIG. 8, as shown by block 264, a series of focused, ESG survey questions are transmitted to the unique group resulting from the sample determination in the data cleaning step (hereafter, referred to as the "unique group") and responses are received. Preferably, the survey questions are sent on a schedule, such as, for example, monthly.

The ESG perception data from the surveys is then inspected by a quality assurance model and cleaned as required, as shown by block 266. This data cleaning step assures data quality by, for example, removing corrupted characters, empty responses, and other data anomalies.

As shown by block 268, ESG perception factor scores are then calculated using the ESG perception data that has been cleaned. The steps of calculating ESG perception factor scores has been described in detail previously with regard to FIG. 6 and FIG. 7, hence the process is not described here again. It is noted, however, that the main steps include converting the raw scores obtained from a unique group of respondents to a 0-100 normative scale and applying cultural and demographic weighting as required to remove cultural and demographic biases, where the concluding step of calculating the aggregated ESG perception factor scores include averaging for each of the ESG perception factors all of the weighted scores from the X respondents of the unique group to obtain the weighted average ESG perception factor scores per the defined time period of surveying. It is reminded that the number of the required ESG perception factors was previously determined by the redundancy analysis described in FIG. 6 block 228. For example, if the number of the ESG perception factors is twenty and the surveying period is monthly, then twenty weighted average ESG perception factor scores are obtained monthly and may be stored in the 100 storage device 104, or within one of the other databases 30a, 30b, 30c within the network 1.

It is described in detail above in block 230 (FIG. 6) how each of the ESG perception factors is assigned to one of the three ESG components, E (environmental), S (social), and G (governance) by the use of an unsupervised machine learning clustering method. Per each of these three ESG components, a single ESG component perception score is obtained for the surveying period (for example monthly). The method to obtain the perception scores for each of the three ESG components is described below and in FIG. 8. As shown by block 270 of FIG. 8, all the weighted environmental factor scores that were assigned to the E (environmental) ESG component are averaged to provide a weighted average environmental component score. These will be referred here as the E component perception scores. In addition, as shown by block 272, all the weighted social factor scores that were assigned to the S (social) ESG component are averaged to provide a weighted average social component score. These will be referred here as the S component perception scores. Further, as shown by block 274, all the weighted governance factor scores that were assigned to the G (governance) ESG component are averaged to provide a weighted average governance component score. These will be referred here as the G component perception scores. Finally, the total ESG perception score for the surveying period (for example monthly) is obtained by averaging all the ESG perception components scores that were previously obtained to determine the total final ESG perception score per the surveying period (for example monthly), as shown by block 276.

As shown by block 278, the three ESG components perception scores, environmental (E), social (S), and governance (G), the averaged ESG perception factor scores per component, and the single final ESG perception score, per surveying period (for example monthly), may be stored in the 100 local storage device 104 (FIG. 2), or within one of the other databases 30a, 30b, 30c within the network 1.

NORMATIVE SCALE

The resulting single final ESG perception score is then categorized into a normative scale, preferably of five categories (FIG. 8, block 280), although less or more categories may be used. It is found that the use of five categories is ideal. For example, the five categories may be weak ESG perception score, poor ESG perception score, average ESG perception score, strong ESG perception score, and excellent ESG perception score. Specific ranges of values between the zero to one hundred range for the ESG perception score may be assigned to each of the five categories, for example based on quantiles of a normal distribution. Categorizing the ESG perception score into a normative scale allows the entity for which reputation management and ESG perception is sought to benchmark itself against various competitive groups, such as other entities, its industry, its region, or others to whom the entity wishes to compare itself with regards to its ESG perception. If the ESG perception scores are obtained periodically, for example monthly, an ESG perception trend may be obtained and the entity may wish to compare its ESG perception performance against past periods, set ESG perception goals and manage its reputation as pertained to its ESG perception more effectively. Categorizing the ESG perception final score into the same normative scale as the other Reputation scores of the entity for which reputation management is sought has the additional advantage of comparing the various scores that affect reputation management on the same normative scale.

It is mentioned that this particular normative scale is mentioned here as a non-limiting example, and many other normative or comparative scales may be used in other implementations of this invention.

ADVANTAGES OF MULTIPLE SCORES

The present system and method provide for a great level of granularity of data, in addition to providing the overall single final aggregated ESG perception score, the ESG perception scores within each of the three categories (environmental, social, and governance), and the categorization of the single final aggregated ESG perception score into a normative scale. Specifically, it is recalled that per surveying period (for example monthly) the X number of original ESG survey question ratings are saved, the X number of rescaled ESG survey question ratings are saved, the X number of rescaled ESG survey question ratings that have been weighted for cultural and demographic bias for each of the three components have been saved, the aggregated score per each of the ESG factors (for example twenty) have been saved, the ESG single aggregated perception score per each of the three ESG components, the E (environmental) component perception score, the S (social) component perception score, and the G (governance) perception score have been saved, the resulting single final ESG perception score has been saved, and the normative scale associated with the single final aggregated ESG perception score has been saved. This level of granularity in the data is very beneficial to the entity for which reputation determination and management is desired.

It is worth mentioning again that while only one final ESG perception score is obtained per a surveying period, and exactly three ESG perception components scores, one per each of environmental (E), social (S), and governance (G) components is obtained, there are usually multiple ESG perception factors. We used here twenty as an example, but more or fewer may be considered in the implementation of this invention, and similarly the number of ESG perception factors that are clustered into each of the three categories of environmental, social, and governance, may vary. In addition, one may consider additional sub-components within each of the ESG three main components of environmental, social, and governance, to seek a finer granularity of ESG perception, to provide the entity seeking reputation determination a more granular, better, and more actionable insight into its reputation management categories.

The memory 106 also contains a behavioral connection module 150. The behavioral connection module 150 is used to determine behavioral connection scores. Behavioral connection scores (also called business outcome scores) are a measure of the likelihood that the targeted population will perform a positive action on behalf of an entity.

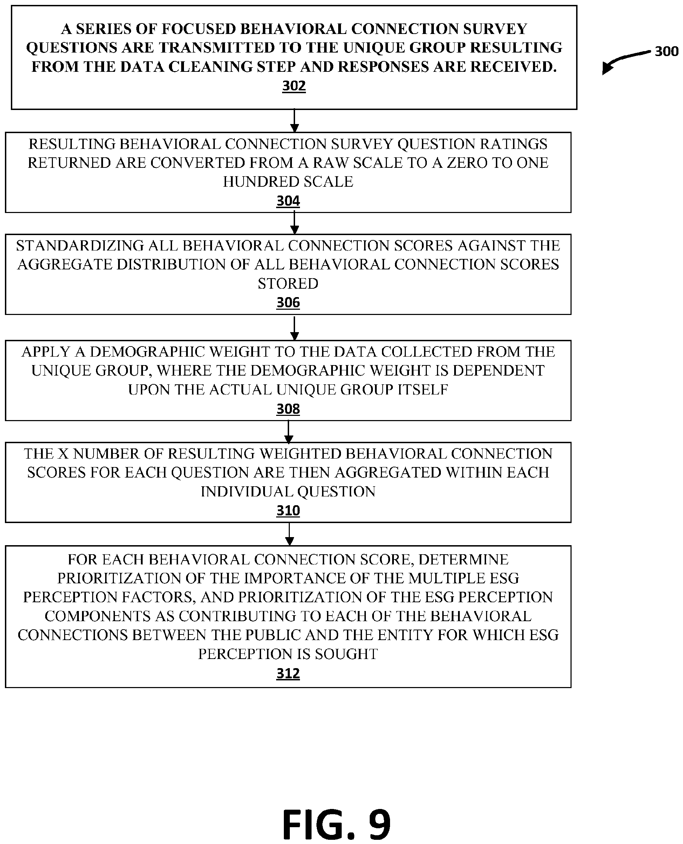

FIG. 9 is a flowchart 300 illustrating steps taken in deriving the behavioral connection score associated with the entity for which ESG perception is to be measured. As shown by block 302, a separate series of focused survey questions, this time being behavioral connection survey questions, are transmitted to the unique group resulting from the data cleaning step. One having ordinary skill in the art would appreciate that transmitting the survey questions may be performed by one or more of many different techniques, such as, but not limited to, having the respondent log into a website, sending materials to review and response, or any other way that a survey may be provided. Of course, as previously mentioned, there may be unique groups for each targeted population group. As non-limiting examples, there may be a general public in the United States unique group, a pet-owners in Europe unique group, an IT decision makers unique group, or a potential investors in the entity unique group. In addition, when all of the scores related to reputation management such as, but not limited to, ESG perception scores, ESG components perception scores, ESG perception factor scores, reputation scores, reputation factor scores, reputation driver scores, behavioral connection scores, and all other reputation management metrics are updated, the members of the unique group may vary from those surveyed in the previous period. Further, each time a set of scores and other related metrics are calculated, the scores and metrics are saved to the database in association with a time period and a unique group, per entity, so as to allow for determining trends, building machine learning models, and to help the entity manage their reputation over time. The database to which these scores and related metrics are saved may be the reputation server 100 storage device 104, or one of the other databases 30a, 30b, 30c within the network 1.

The transmitted behavioral connection survey questions measure the likelihood that a member of the unique group will perform a positive action on behalf of the entity for which ESG perception is being measured. This may also be considered as the Business Outcomes of ESG perception and/or of Reputation Management. Non-limiting examples of survey questions focused on determining a measure of the likelihood that the public will perform a positive action on behalf of an entity include questions asking how likely is it that the surveyed individual would recommend the entity, how likely it is that the surveyed individual would work for the entity, how likely it is that the surveyed individual would buy from the entity, how likely it is that the surveyed individual would invest in the entity, and more.

It is to be recalled that the unique group is the result of the data cleaning step, so that behavioral connection survey answers from the unique group are extremely similar (within a 95% confidence interval) to what would be returned by an entire desired population. More specifically, if for example a unique group is two thousand individuals, survey results from that unique group would be extremely similar (within 95% confidence interval), if not the same (with only a 5% margin of error) as that which would have been received if an entire population of more than one million people for which the survey was intended, were in fact surveyed.

While a specific number of behavioral connection survey questions is not required, it is preferred that there be about ten of such behavioral connection questions, each representing a particular desired business outcome, for example, ten survey questions within a separate set of focused survey questions. It is noted, however, that there may be more or fewer such survey questions within the set of behavioral connection survey questions, depending upon a level of granularity needed.

It is preferred that the answered ratings for each behavioral connection survey question be between one and seven, although one having ordinary skill in the art would appreciate that a different scale may be used that is smaller than a zero to one-hundred scale. This will be apparent in the following description since a conversion is performed to change from a smaller scale to a zero to one-hundred scale, as described herein.

The result of this step is X number of returned responses for each behavioral connection survey question or factor, where X is the number of individuals within the unique group. Therefore, if there are two-thousand individuals within the unique group (the highly reliable demographically representative sample of a survey population that is sized to provide a ninety-five percent or greater confidence interval, from people who are familiar with the surveyed entity), then assuming that all who received the behavioral connection survey questions responded with ratings, there will be two-thousand responses for each behavioral connection survey question, also referred to herein as the resulting behavioral connection survey question ratings. The resulting behavioral connection survey question ratings may be stored within the reputation server 100 storage device 104, or within one of the other databases 30a, 30b, 30c within the network 1.

As shown by block 304, each of the resulting behavioral connection survey question ratings returned are then converted by the reputation engine 108 from a raw scale of one to seven, to a zero to one hundred scale, to provide a rescaled score for each resulting behavioral connection survey question rating returned. This process may be performed by using an equation such as, but not limited to, the previously mentioned equation 1.

The result of this step is X number of behavioral connection scores for each behavioral connection survey question, where X is the number of individuals within the unique group. Each of the behavioral connection scores may then be stored within the reputation server 100 storage device 104, or within one of the other databases 30a, 30b, 30c within the network 1.

To ensure high accuracy in the final determined reputation of the reputation server 100, the present system and method overcomes "cultural bias" in the data by standardizing all behavioral connection scores against the aggregate distribution of all behavioral connection scores stored (block 306). A standardization formula is applied in each market to ensure that behavioral connection scores are comparable across different markets, where different weights are applied to specific data based on the specific market. As previously mentioned, it should be noted that a "market" may be considered a specific geographical region, for example, a country, or a smaller geographical region. The standardization formula takes into account a country mean and a country standard deviation to normalize that which may have been skewed merely as a product of cultural pride or bias in general. The standardized formula may include the previously mentioned equations 2 and 3.

Preferably, the country mean and country standard deviation should be recalculated for a market, or region, within a predefined time period, for example, but not limited to, every year, or every three years. This will ensure a high level of accuracy in the determined behavioral connection score of the present system and method.

As previously mentioned, during data collection from the unique group it is also beneficial to hit demographically representative quotas. As an example, common demographic groups that are targeted to ensure a market demographic representative sample for surveying may include age and gender. Unfortunately, during data collection it is not always possible to hit target demographic quotas exactly. As an example, a target demographic quota may be sixty percent women and forty percent men, however, a resulting highly reliable demographically representative sample of a survey population that is sized to provide a ninety-five percent or greater confidence interval, from people who are familiar with the surveyed entity (*i.e.*, unique group) may not comprise sixty percent women. In these cases, the behavioral connection score module 150 applies a demographic weight to the data collected from the unique group, where the demographic weight is dependent upon the actual unique group itself, so as to ensure that the unique group results are representative of the population targeted (block 308). If the unique group is representative of the population targeted, then no demographic weight is applied.

Also as previously mentioned, in accordance with one exemplary embodiment of the invention, a RIM weighting algorithm may be used to demographically weigh, and therefore match, the returned sample of the unique group, which may have already been culturally weighted, to the demographics of the population to which the study is intended. The algorithm is repeatedly applied to the data until the demographic weight converges. It is noted that a RIM weighting method allows a more precise analysis than a proportional weighting approach, although either method may be used, as well as other weighting methods known to those having ordinary skill in the art.

In accordance with an alternative embodiment of the invention, it should be noted that other weighting of data may be performed to account for other biases, such as, but not limited to, a data sources weighing. This would be beneficial when it is known that a specific data source tends to have a more positively biased or negatively biased audience that is used for surveying. Data source weighting takes this into account and applies a weight based on the source so as to normalize results.

The results after the weighting steps are X number of rescaled, from zero to one hundred, behavioral connection survey question returned ratings that have been weighted for cultural bias and demographic bias, for each of the questions, where X is the number of individuals within the unique group. These results are also referred to herein as weighted behavioral connection scores. The X number of resulting weighted behavioral connection scores for each question are then aggregated within each individual question to provide a single aggregated behavioral connection score for each behavioral connection survey question (block 310). The result is one resulting behavioral connection score for each behavioral connection survey question. For example, if there are ten (10) behavioral connection survey questions, the result after the previously mentioned steps is one aggregate resulting behavioral connection score for each of the ten behavioral connection survey questions.

A resulting report for an entity seeking to determine its ESG perception and/or seeking to manage its reputation could include, per period of time, its aggregate resulting behavioral connection score so as to provide guidance on which areas to invest additional time and money for maximum increase in ESG perception and perhaps as a result in overall reputation.

At this point, resulting data includes ESG perception scores, ESG component perception scores per each of the three ESG perception components (environmental, social, governance), ESG perception factor scores per ESG perception factor (which are usually clustered into the three ESG perception components), and behavioral connection (also called business outcome) scores per behavioral connection question.

Additional obtained scores may include, but do not have to include and are not limited to, the overall reputation score and a list of the reputation drivers scores and associated importance weights prioritizing the importance of each driver for the entity's reputation, and reputation factor scores. So as additional scores as may be related to determining and managing entity's reputation.

RELATIONSHIP BETWEEN SCORES

As a result of these steps, the reputation server 100 now contains the previously determined ESG perception scores, including the multiple resulting ESG perception factor scores, the three ESG components (environmental, social, governance) perception scores, the overall ESG perception scores, and the previously determined reputation supportive behavior scores that are also called business outcomes. It is reminded that ideally these scores are obtained for the entity seeking ESG perception determination for reputation management periodically, for example monthly for each consecutive month for twelve or more months. Returning to FIG. 9, a relationship is sought between these two main bodies of data (ESG perception scores and behavioral connection scores) so as to determine a weight of importance or predictability of the ESG perception components or factors and as a result the ESG perception components or factors order of importance, which will be beneficial to the entity for which ESG perception is sought (block 312). Specifically, an entity seeking a determination of their ESG perception scores may be seeking to be able to attain certain business outcomes or supportive behaviors from its targeted stakeholders population. The present system and method uses the ESG perception module 170 to further determine the prioritization weights of importance or predictability of each of the ESG perception components scores and each of the ESG perception factor scores to maximizing the likelihood of the entity to attain each of the business outcome scores per each of the supportive behavior questions.

In accordance with the present invention, additional actionable insights may be presented to the entity seeking its ESG perception scores for reputation management by determining the connection between the ESG perception of the entity and the supportive behaviors of the unique group towards the entity. Specifically, for each behavioral connection score, the present system and method determines the prioritization of the importance of the multiple (for example twenty) ESG perception factors, and the prioritization of the ESG perception components (environmental, social, and governance) as contributing to each of the behavioral connections between the public and the entity for which ESG perception is sought (block 312). This allows the entity to be better able to determine which actions, as identified by ESG perception components, or ESG perception factors, to focus on in order to increase behavioral connections between the public represented by the unique group and the entity, as these behavioral connections may represent the business outcomes the entity seeking ESG perception determination is targeting.

Prioritization of the importance of ESG perception components, or of the importance of ESG perception factors as contributing to predicting or inferencing each of the behavioral connections can be performed by using, for example, a machine learning regression model, such as, but not limited to, linear regression, multivariate linear regression, random forest, gradient boosting, or another ensemble decision trees regression model, to predict or inference a known behavioral connection score as a dependent variable of the regression model, from the ESG perception component scores, or from the ESG perception factor scores, where the known behavioral connection score may be one previously derived as already described, or one received remotely or stored within the reputation server 100 storage device 104, or within one of the other databases 30a, 30b, 30c within the network 1. As a non-limiting example, in using a linear regression or a random forest regression to prioritize the derived ESG perception three components scores of the entity as contributing to the predictability of a behavioral connection, the behavioral connection may be the question "are you likely to purchase a product from the entity", where the related scores are derived for instance from a three-hundred respondents scores from an unique group of three-hundred individuals periodically, per period, and derived for this behavioral connection question after calculations, weightings, and aggregation. Another example of implementation would be using a regression model with aggregated scores of ESG perception factors, for example twenty, as inputs per each behavioral connection aggregated score as a dependent variable, per entity for which ESG perception is sought, per a time period. A non-limiting example may be, using the aggregated score per period (for example a quarter) of the behavioral connection question 'willing to work for' as the dependent variable of the regression, and the ESG perception aggregated factor scores (for example twenty) as the input variables to be prioritized by importance. Ideally, for increased accuracy and for detecting evolution of prioritization of importance or predictability weights of ESG perception components or factors over time, the regression model may be used repeatedly for consecutive pre-determined periods of time (for example quarterly), and this process may be repeated tens or even hundreds of times, to derive an unknown weight of importance or predictability for each ESG perception component or factor.

Based on the importance or predictability weight derived for each ESG perception component or factor, the ESG perception components or factors that were considered in a certain regression model as predictors of a single behavioral connection dependent variable are prioritized by numerically sorting the determined importance or predictability weights, with the largest ESG perception component, or factor, weight representing the greatest effect on the behavioral connection score (also called business outcome score). The prioritized weights of the perception ESG component scores and ESG perception factor scores are used to prescribe the main areas of focus for the entity seeking ESG perception determination, that the entity may wish to target to improve a certain sought business outcome.

The result is the weight of predictability for each of the ESG perception components or factors per each targeted business outcome, which allows for determining the rank of importance based on the values of the weights, per business outcome. Specifically, per each targeted business outcome, a higher determined weight of an ESG perception component, or an ESG perception factor demonstrates that this component or factor is more important for the likelihood of the entity attaining the targeted business outcome, and conversely a lower determined weight of an ESG perception component, or an ESG perception factor, demonstrates that it is less important for the likelihood of the entity attaining the targeted business outcome. This allows the entity to determine which of the ESG perception components and of which of the ESG perception factors are the most important for increasing the likelihood of attaining each of its targeted business outcomes.

An example of a result may be that for a 'willing to buy form the entity' business outcome (behavioral connection) the most important ESG perception component is the social component perception score, while for a 'willing to work for the entity' business outcome (behavioral connection) the most important ESG perception component is the governance component perception score, and for a 'willing to trust the entity' business outcome (behavioral connection) the most important ESG perception component is the social component perception score.

The prioritization of the most important ESG perception components or factors, and possibly other perception scores, for each of the targeted by the entity business outcomes provide information to the entity (e.g., corporation or brand) on areas to invest in, and which activities to prioritize, to increase the likelihood of enhancing a certain business outcome, or targeting a certain behavior from a population of stakeholders.

A resulting report for an entity seeking its determined ESG perception scores to manage its reputation and attain certain business outcomes could include, per period of time, its overall ESG perception score, its ESG three components, environmental, social, and governance perception scores, its ESG perception factors score per each of the three ESG components, its business outcomes (or supportive behavior) scores, and a list of the associated importance weights of each of the ESG perception component and factors per each of its targeted business outcomes so as to provide guidance on which areas to invest additional time and money for maximum likelihood of targeted business outcomes.

Additional data may also be provided, such as, but not limited to, the entity's reputation scores, reputation factors scores and weights, reputation drivers scores and weights, benchmarking to competitors, industry classification, benchmarking to industry, touch-points between the stakeholder and the entity, media data and scores, and various other metrics that may assist the entity manage its ESG perception and reputation and as a result attain its business outcomes. This data and the trend lines, derived scores and metrics, benchmarking analysis, machine learning results, ESG perception management and reputation management insight and guidance related to ESG perception management and overall reputation management may be delivered to the entity via a digital platform, via one or more means, such as, but not limited to, Power point, excel files, advisory workshops, and one or more of many other means.

## ESG PERCEPTION SCORES FROM MEDIA DATA

The prior description has been provided for determining ESG perception scores through use of surveys. In addition to use of surveys, the present invention may instead determine ESG perception from media and additional sources of data. Unlike in use of surveys, when determining ESG perception from media, questions cannot easily be asked and answered. Examples of media that may be used for determining reputation in accordance with the present invention include, but are not limited to, electronic news feeds, blogs, social media, video media, and much more.

As provided herein, a media ESG perception score is a measure of a sentiment based evaluation about any ESG stance and/or activities of an entity that is calculated using media data.

For calculating ESG perception scores and metrics from media data (and possibly additional enrichment data sources), the present system and method uses text analysis and text mining models such as Natural Language Processing (NLP) methods of machine learning (ML) and artificial intelligence (AI). One having ordinary skill in the art would appreciate that other analytics and data science methods, such as audio to text transcription, information extraction methods, and classic methods of text analytics or text mining, may instead be used by the present system and method to translate media into searchable text and derive quantities and measurements. In other implementations of the present invention, one may also use image recognition, voice recognition or video analysis, and sentiment analysis from audio, images, and video may be deployed.

In the current invention various information extraction and entity extraction NLP methods may be used. As a non-limiting example, one may use Named Entity Recognition (NER) to extract entity names from unstructured text and Keyword in Context (KWIC) methods to create summarized or short text extract around the extracted entity name and/or around a targeted topic or keyword. While other methods, both for entity extraction and short text summaries around an entity name or a keyword may be used, the present description focuses on using these as an example of the implementation.

FIG. 10 is a flow chart 400 illustrating steps taken by the present media data management module 160 (FIG. 3) for purposes of determining ESG component perception scores and an aggregated ESG perception score for an entity through use of at least one media data source. As shown in block 401 an NER (named entity recognition) method may be used to identify at least one media data article that mentions the entity for which ESG perception scores are sought. Each such media article with an identified mention of the entity is saved within the media management module 160. Per each media article mentioning the entity, at least one ESG related keyword is identified if such exist, or the media article is labeled as ESG non-related. When at least one media article with at least one ESG related keyword is identified, at least one text extract from the media article around each identified ESG related keyword is stored. As shown by block 403, an NLP model is trained using KWIC media data points (text extracts around a keyword), each labeled with an ESG keyword-based sentiment, resulting in an at least one trained NLP machine learning (ML) model and stored.

The previously stored NLP ESG keyword-based sentiment trained NLP model is then used for inferencing (or predicting) the sentiment of an at least one ESG related keyword in an at least one keyword in context (KWIC) short text extract from previously stored at least one media article about the entity mentioning an at least one ESG related keyword. For any new media article mentioning the entity, and a new KWIC extracted from it with an ESG related keyword that was stored, an ESG related keyword-based-sentiment is predicted (also called inferenced or inferred) using the trained NLP model (block 405). As shown by block 407, a media ESG perception score is then calculated from all the predicted (or inferenced) sentiments about the found ESG related keywords in KWICs extracted from media articles mentioning the entity and stored.

It should be noted that the text analysis and text mining model that may be used does not have to be an NLP model but may be a different text analysis and text mining model. In such situations of using a text analysis model and/or a text mining model, steps described herein, such as training, would not be necessary, as would be known to one having ordinary skill in in the art.

One having ordinary skill in the art would appreciate that an ESG keyword-based sentiment is an emotion or feeling about the ESG related keyword portrayed in media. A non-limiting example of such an emotion demonstrated within a media data may be that entity X is a "company with a great social awareness", which would result in a positive ESG keyword-based sentiment about entity X. Another non-limiting example of an emotion demonstrated within a media data may be that entity Y is "struggling to meet demands of its stakeholders about its environmental impact", which would result in a negative ESG keyword-based sentiment about entity Y. Usually ESG keyword-based sentiment is measured per an at least one media data point related to an entity that mentions an at least one ESG related keyword, where some non-limiting examples of media data points may be an article, a news post, a blog, a social media post, a text extract, a KWIC text, a video, a podcast, or any other piece of information posted or shared via the media.

Media ESG component perception scores are then determined using the ESG keyword-based inferred sentiments and by classifying the previously saved media points about the entity into one of the three ESG components of Environmental, Social, and Governance. To do so, a classification NLP machine learning model is trained and stored, as shown by block 409, after which the trained model is used to classify new KWIC media data points from retrieved media articles about the entity that contain ESG keywords into the three ESG components (environmental, social, governance). The classification of the ESG associated KWIC media data points to the three ESG components is shown in block 411. As shown by block 413, entity media ESG component aggregated sentiment scores are then determined and stored.

It should be noted that we use in this description an NLP machine learning classification model as a non-limiting example and the classification model does not have to be an NLP model and other machine learning classification models may be used. Moreover, other text analysis and text mining models may be used to assign the stored KWICs and the related ESG keyword-based sentiments to one of the three ESG components that does not have to be a machine learning model but may be a different text analysis and text mining model. In such situations of using a text analysis model and/or a text mining model, steps described herein, such as training, would not be necessary, as would be known to one having ordinary skill in in the art.

It should also be noted that the steps associated with blocks 404 and 409 of model training may be performed in accordance with a predefined scheduled, which may not coincide with each determination of ESG component perception scores and aggregated ESG perception scores. In other words, blocks 404 and 409 need not be executed every time the functionality of FIG. 10 is performed.

FIG. 11 is a flowchart 500 illustrating steps taken by the present media data management model 160 (FIG. 3) for purposes of determining weighted ESG component perception scores and an aggregated weighted ESG perception score for an entity through use of at least one media data source. The determined ESG keyword-based sentiment may be weighted by the significance of the media source, where significance of the media source may be determined by its impact and reach, and/or level of its exposure or influence. Media ESG keyword-based sentiment weights are then determined, as shown by block 502. As shown by block 504, the aggregated and possibly weighted media ESG perception scores about the entity and the entity's media ESG components perception scores are processed by a normative scale alignment algorithm that normalizes and aligns the entity media ESG perception scores and the entity media ESG components perception scores to a normative scale of poor, weak, average, strong, excellent. The normative scale above is just an example, and one having ordinary skill in the art would appreciate that other normative scales may be used as well. It is also worth mentioning that the raw ESG related sentiments about the entity, the aggregated ESG perception scores and component scores derived from media data, the unweighted ESG perception scores and component scores derived from media data, and the weighted ESG perception scores and component scores derived from media data, which were not aligned to any normative scale, may be used as metrics to assess the ESG perception about the entity from media data.

MORE DETAILS ON TRAINING THE NLP MODEL

The NLP model is trained using sentiment-labeled text extracts or segments surrounding a desired keyword (for example, a topic, or an entity name). As a nonlimiting example, the text segments surrounding a keyword may be referred to as key word in context (KWIC), but other short text around a keyword or a summarized text with keywords may be considered similarly. The KWIC data is annotated with a sentiment label, for example of 1 for positive sentiment, -1 for negative sentiment, and 0 for a neutral sentiment, and stored. One having ordinary skill in the art would appreciate that other labeling of sentiment, using numbers or characters, may be used as well. The NLP model is then trained using the sentiment annotated KWIC data, and the trained model is then stored.

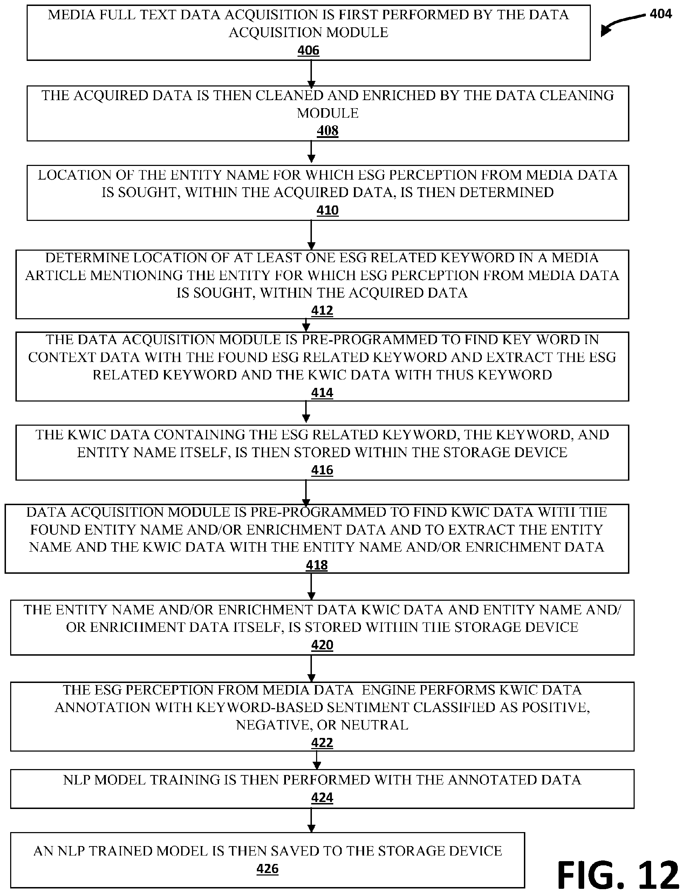

FIG. 12 is a flowchart 404 further illustrating the step of the NLP model being trained. It is important to train the NLP model prior to use so that the model may be used in predicting (also called inferencing or inferring) ESG keyword-based sentiment related to the entity for which ESG perception scores from media data are sought, for determining the ESG perception derived from media. As shown by block 406, media full text data acquisition is first performed by the data acquisition module 122 (FIG. 3) located within the memory 106 (FIG. 3) so that the media data may be analyzed

As shown by block 408, the acquired data is then cleaned and enriched by the data cleaning module 120 (FIG. 3). The manner of cleaning data for NLP model training is different than the data cleaning method previously used for survey results. For cleaning of the acquired media text data, different scripts may be used by the data cleaning module 120 (FIG. 3) to ensure that redundancies in gathered text is removed, spam is removed, corrupted characters are removed from the text, and malicious data is removed, to mention a few of the text data cleaning options. In addition, cleaning may involve determining if a use of the entity name is in the correct context, for example, if the entity name is Apple, making sure that data to be searched is not for the fruit apple.

Enrichment of the data is performed to increase robustness of data that will be made available through training of the model, for predicting (or inferring) ESG keyword-based sentiment, and for determining ESG perception scores derived from media data. Enrichment is performed by determining names of other parties that are related to the entity for which ESG perception from media data is being sought so that those names may also be searched for within the acquired data. In addition, other names or acronyms for the entity may be searched such as a dba, and names of brands or products of the entity may be searched. For example, if corporation X is the entity for which ESG perception from media data is sought, names of the president and CEO of corporation X may also be searched for within the acquired data, thereby making the acquired data more robust because this data is related to the entity for which ESG perception from media data is sought. Enrichment data may also include trademarks of the entity, brand names of the entity, product names of the entity, and more, as long as the enrichment data is related to the entity for which ESG perception from media data is sought.

Pre-determined ESG related keywords list is stored and used to identify whether a media article mentioning the entity contains at least one ESG related keyword. As known to those practicing the art, an ESG related keyword list may be determined from standard ESG frameworks, such as SASB or GRI, ESG reporting standards and regulations, scholar articles, and other ESG related materials available in the media, literature, and additional sources.

Location of the entity name for which ESG perception from media data is sought, within the acquired data, is then determined, as shown by block 410. Specifically, the cleaned data is searched by the data acquisition module 122 to find location of the entity name for which ESG perception from media data is sought.

Location of at least one ESG related keyword in a media article mentioning the entity for which ESG perception from media data is sought, within the acquired data, is then determined, as shown by block 412. Specifically, the cleaned data is searched by the data acquisition module 122 to find location of the ESG related keyword from media data is sought. If no ESG related keywords are found in an article mentioning the entity for which ESG perception from media data is sought the article is marked as non-related to ESG and no longer used for determining ESG perception scores from media data.

The data acquisition module 122 (FIG. 3) is pre-programmed to find key word in context (KWIC) data with the found ESG related keyword and extract the ESG related keyword and the KWIC data with this keyword, as shown by block 414. A predefined number of words prior and after the keyword are captured with the entity name to create the combination of entity name and ESG keyword related KWIC data. As an example, the paragraph of an article mentioning the entity in which the ESG related keyword of interest is located may entirely be extracted as the KWIC data, along with the entity name and the keyword. It is noted that the exact number of words prior and after the searched keyword may vary, and therefore, predefinition of the KWIC size is desired. The KWIC data containing the ESG related keyword, the keyword, and entity name itself, is then stored within the storage device 104 (FIG. 2), as shown by block 416. In addition to storing the entity name, the ESG related keyword, and the KWIC data in which the keyword was found, the uniform resource locator (URL) address, the domain name, media channel, and a title of an article, tweet, video, audio file, or other media data source, associated with the entity name, ESG keyword, and KWIC data may be stored.

The data acquisition module 122 (FIG. 3) is pre-programmed to find KWIC data with the found entity name and/or enrichment data and to extract the entity name and the KWIC data with the entity name and/or enrichment data as shown by block 418. The entity name and/or enrichment data KWIC data and entity name and/or enrichment data itself, is then stored within the storage device 102 (FIG. 2), as shown by block 420. In addition to storing the entity name, the enrichment data and enrichment data KWIC data, the URL address of the entity name and/or enrichment data KWIC data may be stored and a title of an article, video, audio file, or other media data source, associated with the entity name and/or enrichment data KWIC data.

The saved KWIC data, inclusive of the saved entity name KWIC data, the saved ESG keyword KWIC data and the saved enrichment data KWIC data, is used by the ESG perception from media data engine 108 (FIG. 2) to first perform NLP keyword based sentiment model training with a portion of saved KWIC data labeled with sentiment, and later predicting (which may also be called inferencing or inferring) keyword based sentiment in new saved KWIC data with the trained NLP model, and finally determining ESG perception scores from media data for the entity for which ESG perception is sought through the use of media data, as is described in detail herein.

The steps of at least one NLP keyword-based sentiment model training may be performed on a regular cadence, such as monthly, quarterly, or on another cycle so as to ensure that the KWIC data, inclusive of the entity KWIC data, the ESG keyword KWIC data, and the enrichment data KWIC data is current, and to maintain high accuracy of the NLP model.

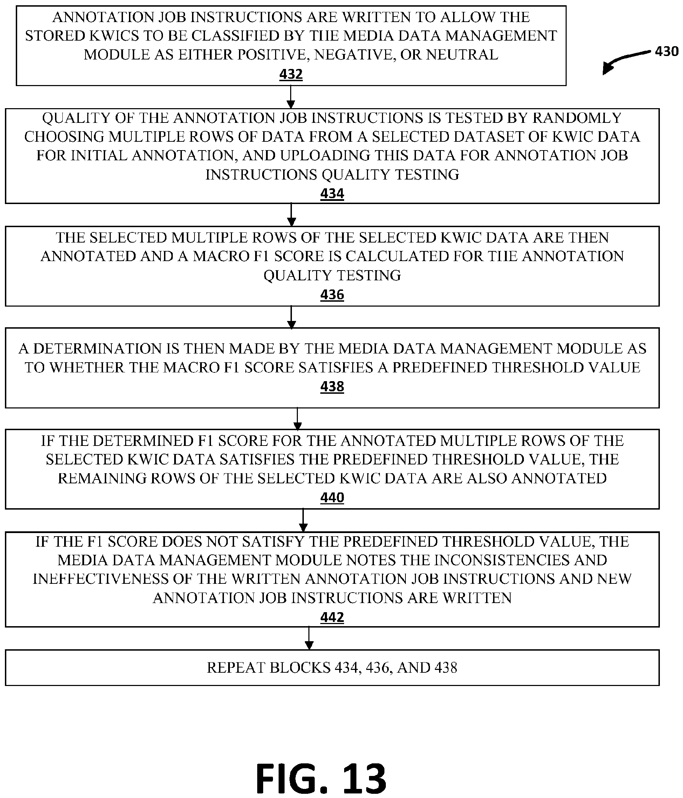

For ESG keyword-based sentiment NLP model training, first a training data set consisting of keyword KWIC data labeled with keyword-based sentiment is obtained and saved. To obtain the training data set a portion of the saved KWICs is annotated (also called labeled) with keyword-based sentiment. As shown by block 422, the ESG perception from media data engine 108 (FIG. 3) performs KWIC data annotation with keyword-based sentiment classified as positive, negative, or neutral. Other more detailed classification may be used, for example very negative, negative, positive, very positive, neutral, etc. For simplicity we will use here as a nonlimiting example sentiment classification to positive/negative/neutral. Usually, numerical labels of 1, -1, and 0 are assigned to represent positive, negative, and neutral, respectively, but other labels, numerical or alphabetical, may be used. As is known by those having ordinary skill in the art, data annotation is the process of labeling data with metadata in preparation for training a machine learning model. Sentiment classification is the automated process of identifying opinions or feelings in text and labeling them as positive, negative, or neutral, based on the emotions expressed within them. Using NLP to interpret subjective data, sentiment classification helps understand how populations or stakeholders, for example, customers feel about the ESG stance and/or activities of companies or brands. Similarly, a keyword-based sentiment represents a portrayed feeling (positive, negative, or neutral) in media data as specifically related to a keyword. The step of performing data annotation for sentiment classification may be performed via a computer, crowd sourcing platforms, human annotation based on set of rules, or using a data annotation algorithm, or service, or any combination of the above. FIG. 13 is a flowchart further illustrating the step of performing data annotation for sentiment classification.

Returning to FIG. 12, as shown by block 424, NLP model training is then performed with the annotated data, wherein examples of NLP models may include, but are not limited to deep learning classification models such as, Convolutional Neural Network (CNN), LSTM, or Transformers based models, such as BERT (Bidirectional Encoder Representations from Transformers). As previously mentioned, annotated data is data labeled with metadata for model training, for example a KWIC data that is labeled with a positive, negative, or neutral sentiment. The step of performing NLP model training with the annotated data includes for example, but not limited to, training a machine learning classification model by using the previously annotated data to tune the hyperparameters of the model until a desired accuracy is reached, for example, AUC ≥ 0.9 (other model accuracy measures may be used as well). As shown by block 426 of FIG. 12, an NLP trained model is then saved to the storage device 104 (FIG. 2). The NLP trained model can then be used to predict (or inference) the ESG keyword-based sentiment within a media article or a KWIC that is later used to determine media ESG perception scores from media data, as will be described in additional detail herein.

As previously mentioned, FIG. 13 is a flowchart 430 further illustrating the step of performing data annotation for sentiment classification. Referring to FIG. 13, annotation job instructions are first written to allow the stored KWICs to be classified by the media data management module 160 (FIG. 3) as either positive, negative, or neutral (block 432). In accordance with the present invention, the job instructions, as provided by the media data management module 160 (FIG. 3), provide instructions to the annotation system for which sentiment-determining-keywords are to be used in annotation in order to classify each KWIC data item as positive, negative, or neutral. In other examples of implementation of this invention, a more granular classification may be used, such as very negative, negative, positive, very positive, or neutral. Other labels describing positive and negative, such as for example good and bad may also be used.

Specifically, the sentiment-determination-keywords used during annotation of ESG related sentiment classification are words or phrases that positively, negatively or neutrally describe an entity's overall ESG activities, or an entity's activities as related to one of the ESG three components, environmental, social, and governance. An entity may be, for example, a corporate, company, a brand, or even a defined group of individuals (such as a leadership team). The various keywords used for annotation jobs may be stored within the storage device 104 (FIG. 2). Positive words may include for example "excellent", "outstanding" and "great", while negative words may include "poor", "bad", and "horrible". Words or phrases that are not included in the positive or negative words categories may be considered by the media data management module 160 (FIG. 3) to be neutral. Alternatively, neutral words may be predefined, like the positive and negative words, and stored within the storage device 104 (FIG. 2). Additionally, for training an NLP machine learning classification model that will classify ESG related media data points to one of the three ESG components, environmental, social, or governance, ESG specific keywords are used from the previously mentioned standard ESG keywords list that is saved in the storage device 104 (FIG. 2). The ESG specific keywords are words or phrases that help associate a media data point (for example a KWIC) to one of the three ESG components (environmental, social, or governance). These additional ESG specific keywords are used during the annotation process, for training a model to classify ESG related media data points into at least one media ESG component.

We may recall that the ESG environmental component consider how an entity performs as a steward of nature, the ESG social component examine how it manages relationships with employees, suppliers, customers, and the communities where it operates, and the ESG governance component deals with a company's leadership, executive pay, audits, internal controls, and shareholder rights.

For example, ESG specific keywords related to the environmental component may include words or phrases such as "environmental impact", "carbon emissions", "climate", or "toxic waste"; ESG specific keywords related to the social component may include words or phrases such as "treats employees fairly", "contributes to the community", or just "social"; ESG specific keywords related to the governance component may include words or phrases such as "executive pay", "leadership", "government mandated reporting" or "ethics".

As shown by block 434, after the annotation job instructions are written, so as to allow the media data management module 160 (FIG. 3) to categorize each individual ESG keyword KWIC as either information stating something positive about the entity's ESG related activities, something negative about the entity's ESG related activities, or simply contain information that is neutral with regard to the entity's ESG activities, and in addition to annotate each individual ESG keyword KWIC as associated with at least one of the three ESG components, (environmental, social, or governance), quality of the annotation job instructions is tested by randomly choosing multiple rows of data from a selected dataset of KWIC data for initial annotation, and uploading this data for annotation job instructions quality testing. As shown by block 436, the selected multiple rows of the selected KWIC data are then annotated and a macro F1 score is calculated for the annotation quality testing. F1 score is a common measure of accuracy in machine learning and other similar measures of accuracy may be used. Since F1 score is terminology that is well known by those having ordinary skill in the art, beyond the equations 3-5 below describing how F1 scores and related scores of accuracy may be calculated, additional detailed description is not provided herein.

$$F1 = \frac{2*Precision*Recall}{Precision+Recall} \qquad (\text{Eq. } 3)$$

$$Precision = \frac{\# \, True \, Positives}{\# \, (True \, Positives + False \, Positives)} \qquad (Eq. \; 4)$$

$$Recall = \frac{\# \, True \, Positives}{\# \, (True \, Positives + False \, Negatives)} \qquad (Eq. \; 5)$$

As shown by block 438, a determination is then made by the media data management module 160 (FIG. 3) as to whether the macro F1 score satisfies a predefined threshold value. For example, a required F1 score may be 0.85. If the determined F1 score for the annotated multiple rows of the selected KWIC data satisfies the predefined threshold value, the remaining rows of the selected KWIC data are also annotated (block 440), since testing of the selected multiple rows of the KWIC data has proven the written annotation job instructions to be good. Alternatively, if the F1 score does not satisfy the predefined threshold value, the media data management module 160 (FIG. 3) notes the inconsistencies and ineffectiveness of the written annotation job instructions and new annotation job instructions are written (block 442), after which block 434 is repeated to randomly select multiple rows of data from a selected KWIC data for initial annotation testing of the newly written annotation job instructions, and such data is uploaded for annotation. The selected multiple rows of the selected KWIC data are then annotated and a new F1 score is calculated (block 436). A determination is then again made by the media data management module 160 (FIG. 3) as to whether the new F1 score satisfies the predefined threshold value (block 438). This sequence is repeated until the score does satisfy the predefined threshold value. The training dataset of annotated KWICs labeled with both a sentiment value of one, zero, or minus one, and an ESG component association value of E, S, or G are then saved to the storage device 104 (FIG. 2). It is noted that same KWIC data may be associated with more than one ESG components.

Using the saved annotated KWIC data at least one NLP keyword-based sentiment model and at least one NLP classification model to ESG components are trained. Then the now trained NLP models are saved to the media management module 160 (FIG. 3).

With the NLP models trained and saved, the media data management module 160 (FIG. 3) then uses the NLP keyword-based sentiment trained model to predict (or inference) ESG keyword-based sentiment of newly acquired media data about each entity for which ESG perception from media data is sough, to determine its ESG perception score from media data. This process is illustrated by block 405 of the flowchart 400 of FIG. 10. As previously mentioned, FIG. 10 illustrates the step of predicting ESG keyword-based sentiment with the trained NLP model. Now that each obtained ESG related media data point about the entity is labeled with an ESG keyword-based sentiment with '1' (positive), '-1' (negative), or '0' (neutral), ESG perception scores form media data are determined.

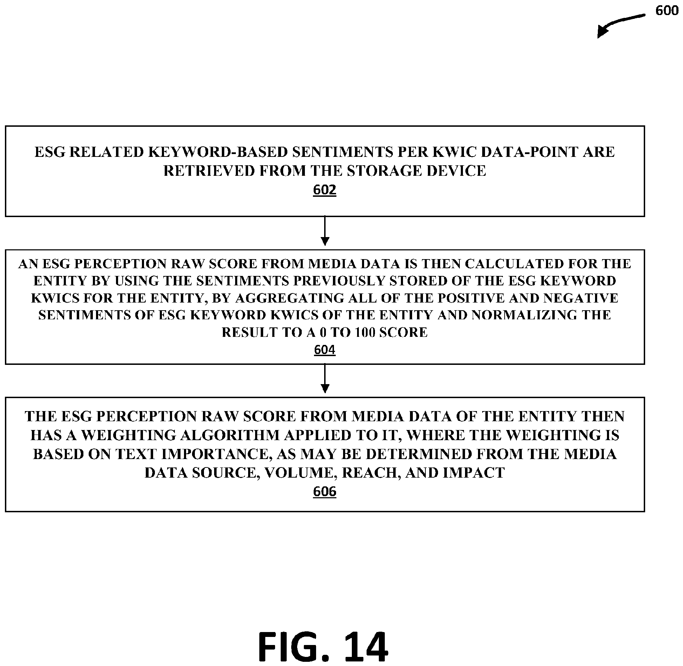

The step of calculating and storing ESG perception scores from media data (block 407 and 413), of FIG. 10, is further illustrated and described with regard to the flowchart 600 of FIG. 14. Referring to FIG. 14, ESG related keyword-based sentiments per KWIC data-point are retrieved from the storage device, as shown by block 602. An ESG perception raw score from media data is then calculated for the entity by using the sentiments previously stored of the ESG keyword KWICs for the entity, by aggregating all of the positive and negative sentiments of ESG keyword KWICs of the entity and normalizing the result to a 0 to 100 score, as shown by block 604. A non-limiting example of the way of determining the ESG perception raw score from media data is by aggregating the sentiments of the ESG keyword KWICs of the entity and normalizing to a 0 to 100 score is depicted by equation 6, as illustrated herein. An ESG perception raw score form media data may be calculated periodically, such as but not limited to, daily, weekly, or monthly using, as a non-limiting example equation 6 below.

$$ESG \; perception \; raw \; score \; from \; media \; data = 0.5 \; x \; (100 \; x \; \frac{\sum Positive + \sum Negative}{\sum Positive - \sum Negative} + 100)$$

Eq. 6

As shown by block 606, the ESG perception raw score from media data of the entity then may have a weighting algorithm applied to it, where the weighting is based on text importance, as may be determined from the media data source, volume, reach, and impact, so as to allow for greater consideration of KWICs from sources that are potentially more important, having greater influence, and/or exposure. One having ordinary skill in the art would know different techniques for weighting data or data sources, and therefore, while the following provides one example of a method that may be used to weigh media data points, it should be noted that this is not intended to limit the present invention to this method of weighting. It is noted that it may not be necessary to apply a weighting algorithm to the ESG perception raw score from media data. This step depends upon whether there is a desire to weight certain sources differently.

It will be recalled that the storage device 102 (FIG. 2) has stored therein the entity name KWIC data, entity name itself, the ESG keyword KWIC data, the URL address of the media data point from which the KWICs were extracted, title of an article, video, audio file, or other media data point, associated with the entity name KWIC data and the ESG keyword KWIC data, and the sentiment value of the ESG keyword KWIC data, the ESG keywords extracted, and any associated enrichment data.

In accordance with an alternative embodiment of the invention, a quality step may be added to ensure that redundancy in storage and sentiment consideration of KWICs does not adversely affect the ESG perception scores from media data. More specifically, it should be noted that certain media points, articles, or KWICs may be saved multiple times for a variety of reasons. In accordance with the alternative embodiment of the invention, the media data management module 160 determines if there are redundantly stored KWICs, and if so, it determines if the sentiment value for the redundantly stored KWICs are the same. If the KWIC is redundantly stored and the sentiment value of the redundantly stored KWICs is the same, one of the KWICs is deleted. Alternatively, the KWIC may be redundantly stored and the sentiment value of the redundantly stored KWICs may differ. If this happens a mediating algorithm is usually invoked to determine the most correct sentiment value of the duplicated KWIC, and in some cases even a human quality assurance (QA) process may be initiated if necessary, and only one copy of the redundant KWIC with the final determined sentiment value is stored.

Weighting of the ESG perception raw score from media data may be performed in one of many different ways. For exemplary purposes only, the following describes a three-step process that may be used for weighting. In a first step, prominence weight features are created per KWIC, so that a weight may be applied for KWIC sources that are potentially more important, having greater influence, and/or potential exposure to entity's stakeholders and audiences. For nonlimiting exemplary purposes, the following equations 7-9 may be used in this calculation.

$$Prominence\ Weight =$$

$$\begin{cases} a_1 & if\ the\ entity\ name\ is\ not\ in\ the\ Title\ or\ Url,\ and\ 'PageType'\ \neq Twitter \\ a_2 & if\ the\ entity\ name\ is\ in\ the\ Title\ or\ Url,\ and\ 'PageType'\ = Twitter \end{cases} \qquad Eq.\ 7$$

Where, for example, $a_1$ = numerical value < 1 (for example 0.5) and $a_2$ = 1.

Then, additional weighting steps may be added. For example, a second step, where a Weighted Sentiment is created for each KWIC as:

$$Weighted\ Sentiment = a_3 * (Impact\ *\ Prominence\ Weight)\ *\ Sentiment \qquad Eq.\ 8$$

Where, for example, $a_3$ < 1.

Then, for example, as a third and final step, the weighted ESG perception score from media data for an entity in a given time period, such as, but not limited to, a week or month, may be defined as:

$$Weighted\ ESG\ perception\ score\ from\ media\ data =$$

$$0.5x(100x(\frac{\sum Positive\ Weighted\ Sentiments + \sum Negative\ Weighted\ Sentiments}{\sum Positive\ Weighted\ Sentiments - \sum Negative\ Weighted\ Sentiments) + \#\ of\ Neutral\ Mentions} + 100)$$

$$Eq.\ 9$$

**ESG COMPONENT SCORES FROM MEDIA DATA**

In addition to determining periodically (for example daily, weekly, or monthly) the ESG perception score of an entity from media data, as part of the present invention the ESG component perception scores for the three ESG components, environmental, social, and governance, of the entity are determined for the same period to allow the entity to assess its ESG perception from media data not only overall but also per each of the components to determine actions the entity may take to improve its ESG perception with its stakeholders and audiences and as a result improve its reputation management and possibly attain better business outcomes.

It will be recalled that the storage device 102 (FIG. 2) has stored therein the entity name KWIC data, entity name itself, the ESG keyword KWIC data, the URL address of the media data point from which the KWICs were extracted, title of an article, video, audio file, or other media data point, associated with the entity name KWIC data and the ESG keyword KWIC data, the sentiment value of the ESG keyword KWIC data, the ESG keywords extracted, any associated enrichment data, and the association of each ESG keyword KWIC data to one of the three ESG components, E, S, or G, as was predicted (or inferred) by the trained NLP classification model saved to the media management module 160 (FIG. 3).

An ESG environmental (E) component raw score from media data is determined by aggregating the sentiments of all KWIC data points that were classified to the environmental component E using, for example, the formula in equation 6, to obtain a E perception raw score from media data of the entity.

An ESG social (S) component raw score from media data is determined by aggregating the sentiments of all KWIC data points that were classified to the social component S using, for example, the formula in equation 6, to obtain a S raw perception score from media data of the entity.

An ESG governance (G) component raw score from media data is determined by aggregating the sentiments of all KWIC data points that were classified to the governance component G using, for example, the formula in equation 6, to obtain a G perception raw score from media data of the entity.

Similarly to the ESG perception raw score from media data, the E, S, and G perception raw scores from media data may be weighted by the impact, reach, influence importance of the media data source from which each KWIC contributing to the score was derived.

Weighting of the E, S, and G components perception raw score from media data may be performed in one of many different ways. For exemplary purposes only, the following describes a three-step process that may be used for weighting. In a first step, prominence weight features are created per KWIC, so that a weight may be applied for KWIC sources that are potentially more important, having greater influence, and/or potential exposure to entity's stakeholders and audiences. For nonlimiting exemplary purposes, the following equations 7-9 may be used in this calculation. Then, for example, as a third and final step, the weighted E, S, and G components perception scores from media data for an entity in a given time period, such as, but not limited to, a week or month, may be calculated using equation 9 in a similar way to the overall weighted ESG perception score from media data as was demonstrated in detail above. It will be recalled that weighting the media ESG perception scores or media ESG components perception scores derived from media data is not necessary and the unweighted scores may be used as well.

It is worth mentioning that similarly to the ESG perception scores form survey data, the ESG perception scores from media data may be aligned to a normative scale, for example of poor, weak, average, strong, and excellent, based on scores distribution. This normative scale is just a non-limiting example of a normative scale that may be used, but other normative scales, numeric or other, may be used as well, with more or fewer components.

The alignment to a normative scale is particularly useful if the entity seeks to compare its ESG perception scores from surveys data versus from media data for a full assessment of its ESG perception in the public. However, the alignment to a normative scale is not necessary for this invention and may be skipped if preferred.

It is worth mentioning that in another implementation of the present invention the ESG perception scores may be divided to a more granular level of components. For example, each of the three components of E, S, and G may be divided to two sub components for greater granularity. Even further granularity may be achieved if the ESG score is divided to the 26 components defined by the SASB framework, or even to the level of materiality keywords, which may vary by industry.

For simplicity, we described here the three main ESG components, environmental, social, and governance, and dividing to sub-components may be achieved with similar methods to the described here.

The full body of scores and metrics and the relationship between them enable an entity to assess its ESG perception by the public with great accuracy, and use this intelligence to mange its reputation as related to ESG perception. ESG perception is measured from the reputation point of view and may be considered as a risk for good reputation if it is not positive, hence entities may benefit from managing their ESG perception as part of their reputation management regime.

## Claims

1. A method for determining ESG (environmental, social, governance) perception of an entity, comprising the steps of:

determining a sample size of population that is demographically representative of a desired survey population and which provides at least a pre-defined percent confidence interval, where those within the sample size have a predefined level of familiarity with the entity, and wherein this sample size which provides at least a pre-defined percent confidence interval, and which has the predefined level of familiarity, is referred to herein as a unique group;
determining the measure of perception about an entity's stance and/or activities related to environmental impact, social responsibility, and governance standards of those within the unique group, referred to herein as an ESG perception score, wherein determining the ESG perception score of an entity comprises the steps of:

receiving survey rankings from ESG focused survey questions, where each survey ranking is provided by a party within the unique group, and wherein the ESG survey questions are categorized into more than one category or component;
converting the received rankings from a raw scale to a zero to one-hundred scale; weighting the received survey rankings to accommodate for at least one of the group consisting of cultural bias and missed demographic quotas; and
aggregating the converted received rankings within each category or component, and averaging the aggregated results within the different categories to provide an overall ESG perception score.

2. The method of claim 1, wherein the pre-defined percentage confidence interval is ninety-five percent confidence interval.

3. The method of claim 1, further comprising providing the entity seeking to evaluate its ESG perception with a single aggregated behavioral connection score (also called a business outcome score) for each behavioral connection survey question.

4. The method of claim 1, further comprising providing the entity seeking to evaluate its ESG perception with ESG perception component scores, per each of the three ESG components, environmental, social, and governance, where deriving an ESG perception component score includes the steps of:
aggregating the converted received rankings within each component, and averaging the aggregated results within each component to obtain an ESG perception component score, per component.

5. The method of claim 1, further comprising providing the entity seeking to evaluate its ESG perception with ESG perception factor scores, per each ESG factor, where deriving an ESG perception factor scores includes the steps of:
aggregating the converted rankings received from the members of the unique group for the ESG focused survey questions per question, where each ESG focused survey question is referred to as an ESG factor, and averaging the aggregated results within each ESG factor to obtain an ESG perception factor score, per ESG factor.

6. The method of claim 1, where a set of overall ESG perception scores, ESG perception components scores, ESG perception factors scores, and behavioral connection scores (also called business outcomes scores), is derived from a set of unique groups over pre-defined time intervals to create an overtime trend of scores per entity.

7. A method to prioritize at least one of the group consisting of ESG perception components scores and ESG perception factors scores as contributing to, or as predictors of, the measure of likelihood that a unique group will perform a positive action on behalf of an entity, referred to as a behavioral connection (also called a business outcome), comprising the steps of:

using a machine learning model and the determined ESG perception components scores, or ESG perception factors scores, as input variables, wherein at least one of the behavioral connections (also called business outcomes) is used as a dependent variable, and where the ESG perception components scores, or the ESG perception factors scores, are prioritized as contributing to, or as predictors of, the at least one supportive behavior or business outcome and comprising the steps of:

assigning numerical weights to each of the ESG perception components scores, or to the each of the ESG perception factors scores, based on their prioritization of importance as contributing to, or as predictors of, the supportive behavior score which is used as the dependent variable of the model;
ranking the ESG perception components, or the ESG perception factors, based on their prioritization of importance as contributing to, or as predictors of, the at least one supportive behavior score used as a dependent variable; and
providing the ranked prioritization of the ESG perception components, or the ESG perception factors, to the entity for which ESG perception is sought.

8. The method of claim 7, wherein the machine learning model is from the group comprised of regression models, linear regression, multivariate linear regression, random forest, gradient boosting, and ensemble decision tree models.

9. The method of claim 1, further comprising the step of deriving correlations between ESG perception scores and at least one set of scores from the group consisting of reputation scores, and behavioral connections or business outcomes scores, over a pre-defined time period.

10. A method for determining media ESG perception scores of an entity from at least one media data source, comprising the steps of:

using at least one of the group consisting of a text analysis model and a text mining model to determine if an ESG keyword-based sentiment toward an entity for which ESG perception is sought is positive, negative, or neutral by use of at least one media data point in at least one media data source, wherein a keyword-based sentiment is an emotion or a feeling about the topic of a keyword (a word or a phrase) portrayed by the at least one media data point, and assigning a sentiment numerical value to the at least one media data point based on whether the determined ESG keyword-based sentiment toward the entity is positive, negative, or neutral; determining at least one media ESG perception score by aggregating the determined ESG keyword-based sentiments from at least one media data source for the entity for which ESG perception is sought, wherein a media ESG perception score is a measure of emotion portrayed about the ESG stance or activities of the entity in the media; and

categorizing at least one media data point with the at least one ESG component, E (environmental), S (social), or G (governance), or determining that the at least one media data point cannot be associated with any of the ESG perception components.

11. The method of claim 10, further comprising the step of:
determining for the entity for which ESG perception is sought at least one media ESG perception component score for at least one ESG component (E, S, or G) with at least one associated media data point from at least one media source by aggregating the determined ESG keyword-based sentiments associated with that component (E, S, or G).

12. The method of claim 10, where the text analysis and text mining model is a model from the list comprising a machine learning model, a supervised machine learning model, an unsupervised machine learning model, a clustering model, a natural language processing (NLP) model, and a combination of models.

13. The method of claim 10, further comprising the step of training a supervised machine learning model or a natural language processing (NLP) model using media data labelled with a positive, negative, or neutral ESG keyword-based sentiment related to an entity for which ESG perception is sought.

14. The method of claim 10, where categorizing an at least one media point from at least one media source to at least one ESG component, E, S, or G, is performed using a machine learning, selected from the group consisting of a natural language processing (NLP) model, a supervised machine learning model, an unsupervised machine learning model, a clustering model, a deep learning model, and a combination of models.

15. The method of claim 10, wherein the step of determining for the entity for which ESG perception is sought, at least one media ESG perception score from media data is derived from the list of a single overall media ESG perception score, a media ESG perception component score, and a media ESG perception sub-component score, and further comprises the steps of calculating raw media ESG perception scores form the determined ESG keyword-based sentiment values assigned to the at least one media data point, aggregating the positive, negative, and/or neutral, determined sentiments about the ESG keyword as related to the entity, and weighting the derived sentiment by the media data point importance, as may be determined from the media data source, volume, reach, and impact.

16. The method of claim 10, where the machine learning model or the NLP model is a classification model trained with previously annotated data.

**1**

**100**

**20a**

**20b**

**20c**

Internet
**10**

**30a**

**30b**

**30c**

# FIG. 1

REPUTATION ENGINE
108

SOFTWARE
110

O/S
170

MEMORY
106

STORAGE
DEVICE
104

PROCESSOR
102

LOCAL BUS  172

INPUT /
OUTPUT
DEVICES
174

100

# FIG. 2

DATA CLEANING
MODULE
120

REPUTATION
PERCEPTION SCORE
MODULE
130

OPERATING
SYSTEM
165

REPUTATION
DRIVER SCORE
MODULE
140

MEDIA DATA
MANAGEMENT
MODULE
160

BEHAVIORAL
CONNECTION
MODULE
150

ESG PERCEPTION
MODULE
170

MEMORY
106

# FIG. 3

DATA OBTAINED FOR DETERMINING REPUTATION OF AN
ENTITY AND THAT DATA IS CLEANED
202

ESG PERCEPTION SCORE MODULE OF THE REPUTATION
SERVER GENERATES AN ESG PERCEPTION MODEL
220

DETERMINE ESG PERCEPTION SCORES
260

MEDIA DATA MANAGEMENT MODULE OF THE REPUTATION
SERVER THEN GENERATES AN ESG PERCEPTION MODEL FROM
MEDIA DATA
290

DETERMINES ESG MEDIA SCORES OF THE ENTITY
320

# FIG. 4

202

DETERMINE SAMPLE SIZE OF POPULATION THAT IS
DEMOGRAPHICALLY REPRESENTATIVE OF DESIRED SURVEY
POPULATION
204

FROM THE DEMOGRAPHICALLY REPRESENTATIVE SAMPLE THAT IS
SIZED TO PROVIDE A DESIRED CONFIDENCE INTERVAL, ONLY SELECT
THOSE FAMILIAR WITH THE ENTIY FOR WHICH REPUTATION IS
SOUGHT
206

PERFORM CHEATING TEST / UNRELIABILITY TEST TO REMOVE THOSE
NOT LIKELY TO PROVIDE TRUE RESPONSES TO SURVEY QUESTIONS
208

# FIG. 5

A SERIES OF FOCUSED, ESG RELEVANT SURVEY QUESTIONS ARE CREATED FOR SENDING TO THE UNIQUE GROUP RESULTING FROM THE SAMPLE DETERMINATION IN THE DATA CLEANING STEP
224

222

ESG PERCEPTION SCORE MODULE THEN CALCULATES ESG FACTOR SCORES USING THE CREATED SURVEY QUESTIONS AND ASSOCIATED RESPONSES
226

ESG PERCEPTION SCORE MODULE MAY RUN A REDUNDANCY ANALYSIS TO REDUCE THE NUMBER OF ESG FACTORS IF THERE ARE REDUNDANT ESG FACTORS
228

UNSUPERVISED MACHINE LEARNING CLUSTERING IS THEN USED BY THE ESG COMPONENT SCORE MODULE TO DETERMINE TO WHICH OF THE THREE ESG COMPONENTS EACH ESG PERCEPTION FACTOR BELONGS
230

# FIG. 6

CREATED ESG SURVEY QUESTIONS ARE TRANSMITTED TO THE UNIQUE GROUP RESULTING FROM THE DATA CLEANING STEP
242

240

RESULTING PRACTICAL THINKING SURVEY QUESTION RANKINGS ARE THEN CONVERTED FROM A RAW SCALE TO A ZERO TO ONE HUNDRED SCALE
244

STANDARDIZING ALL FACTOR SCORES AGAINST THE AGGREGATE DISTRIBUTION OF ALL FACTOR SCORES STORED
246

ESG PERCEPTION SCORES MODULE APPLIES A DEMOGRAPHIC WEIGHT TO THE DATA COLLECTED FROM THE UNIQUE GROUP
248

FOR EACH OF THE ESG FACTORS THE AVERAGE OF THE WEIGHTED ENVIRONMENTAL, SOCIAL, AND GOVERNANCE X FACTOR SCORES FROM THE INDIVIDUAL RESPONDENTS OF THE UNIQUE GROUP ARE THEN AVERAGED PER FACTOR, TO DERIVE THE ESG PERCEPTION WEIGHTED FACTORS SCORES PER FACTOR
250

THE ESG PERCEPTION WEIGHTED FACTORS SCORES ARE THEN AVERAGED TO DERIVE AN OVERALL ESG PERCEPTION WEIGHTED SCORE
252

# FIG. 7

A SERIES OF FOCUSED, ESG SURVEY QUESTIONS ARE
TRANSMITTED TO THE UNIQUE GROUP RESULTING
FROM THE SAMPLE DETERMINATION IN THE DATA
CLEANING STEP AND RESPONSES ARE RECEIVED.
**264**

ESG PERCEPTION DATA FROM THE SURVEYS IS THEN
INSPECTED BY A QUALITY ASSURANCE MODEL AND
CLEANED AS REQUIRED
**266**

ESG PERCEPTION FACTOR SCORES ARE THEN
CALCULATED USING THE ESG PERCEPTION DATA
THAT HAS BEEN CLEANED
**268**

ESG PERCEPTION FACTOR SCORES ARE THEN
CALCULATED USING THE ESG PERCEPTION DATA
THAT HAS BEEN CLEANED
**268**

WEIGHTED ENVIRONMENTAL FACTOR SCORES THAT
WERE ASSIGNED TO THE E (ENVIRONMENTAL) ESG
COMPONENT ARE AVERAGED
**270**

WEIGHTED SOCIAL FACTOR SCORES THAT WERE
ASSIGNED TO THE S (SOCIAL) ESG COMPONENT ARE
AVERAGED
**272**

WEIGHTED GOVERNANCE FACTOR SCORES THAT WERE
ASSIGNED TO THE G (GOVERNANCE) ESG COMPONENT
ARE AVERAGED
**274**

AVERAGING ESG PERCEPTION COMPONENTS SCORES
PREVIOUSLY OBTAINED TO DETERMINE THE TOTAL
FINAL ESG PERCEPTION SCORE PER SURVEYING PERIOD
**276**

THE THREE ESG COMPONENTS PERCEPTION SCORES,
THE AVERAGED ESG PERCEPTION FACTOR SCORES PER
COMPONENT, AND THE SINGLE FINAL ESG PERCEPTION
SCORE, PER SURVEYING PERIOD , MAY BE STORED
**278**

RESULTING SINGLE FINAL
PERCEPTION SCORE IS
CATEGORIZED INTO A
NORMATIVE SCALE
**280**

262

# FIG. 8

A SERIES OF FOCUSED BEHAVIORAL CONNECTION SURVEY QUESTIONS ARE TRANSMITTED TO THE UNIQUE GROUP RESULTING FROM THE DATA CLEANING STEP AND RESPONSES ARE RECEIVED.
302

300

RESULTING BEHAVIORAL CONNECTION SURVEY QUESTION RATINGS RETURNED ARE CONVERTED FROM A RAW SCALE TO A ZERO TO ONE HUNDRED SCALE
304

STANDARDIZING ALL BEHAVIORAL CONNECTION SCORES AGAINST THE AGGREGATE DISTRIBUTION OF ALL BEHAVIORAL CONNECTION SCORES STORED
306

APPLY A DEMOGRAPHIC WEIGHT TO THE DATA COLLECTED FROM THE UNIQUE GROUP, WHERE THE DEMOGRAPHIC WEIGHT IS DEPENDENT UPON THE ACTUAL UNIQUE GROUP ITSELF
308

THE X NUMBER OF RESULTING WEIGHTED BEHAVIORAL CONNECTION SCORES FOR EACH QUESTION ARE THEN AGGREGATED WITHIN EACH INDIVIDUAL QUESTION
310

FOR EACH BEHAVIORAL CONNECTION SCORE, DETERMINE PRIORITIZATION OF THE IMPORTANCE OF THE MULTIPLE ESG PERCEPTION FACTORS, AND PRIORITIZATION OF THE ESG PERCEPTION COMPONENTS AS CONTRIBUTING TO EACH OF THE BEHAVIORAL CONNECTIONS BETWEEN THE PUBLIC AND THE ENTITY FOR WHICH ESG PERCEPTION IS SOUGHT
312

# FIG. 9

400

NER (NAMED ENTITY RECOGNITION) METHOD MAY BE USED TO IDENTIFY AT LEAST ONE MEDIA DATA ARTICLE THAT MENTIONS THE ENTITY FOR WHICH ESG PERCEPTION SCORES ARE SOUGHT
**401**

AN NLP MODEL IS TRAINED USING KWIC MEDIA DATA POINTS, EACH LABELED WITH AN ESG KEYWORD-BASED SENTIMENT, RESULTING IN AN AT LEAST ONE TRAINED NLP MACHINE LEARNING MODEL AND STORED
**403**

FOR ANY NEW MEDIA ARTICLE MENTIONING THE ENTITY, AND A NEW KWIC EXTRACTED FROM IT WITH AN ESG RELATED KEYWORD THAT WAS STORED, AN ESG RELATED KEYWORD-BASED-SENTIMENT IS PREDICTED USING THE TRAINED NLP MODEL
**405**

A MEDIA ESG PERCEPTION SCORE IS THEN CALCULATED FROM ALL THE PREDICTED (OR INFERENCED) SENTIMENTS ABOUT THE FOUND ESG RELATED KEYWORDS IN KWICS EXTRACTED FROM MEDIA ARTICLES MENTIONING THE ENTITY AND STORED
**407**

A CLASSIFICATION NLP MACHINE LEARNING MODEL IS TRAINED AND STORED
**409**

CLASSIFICATION OF THE ESG ASSOCIATED KWIC MEDIA DATA POINTS TO THE THREE ESG COMPONENTS
**411**

ENTITY MEDIA ESG COMPONENT AGGREGATED SENTIMENT SCORES ARE DETERMINED AND STORED
**413**

# FIG. 10

500

| MEDIA ESG KEYWORD-BASED SENTIMENT WEIGHTS ARE THEN DETERMINED |
| :---: |
| **502** |

↓

| THE AGGREGATED AND POSSIBLY WEIGHTED MEDIA ESG PERCEPTION SCORES ABOUT THE ENTITY AND THE ENTITY'S MEDIA ESG COMPONENTS PERCEPTION SCORES ARE PROCESSED BY A NORMATIVE SCALE ALIGNMENT ALGORITHM THAT NORMALIZES AND ALIGNS THE ENTITY MEDIA ESG PERCEPTION SCORES AND THE ENTITY MEDIA ESG COMPONENTS PERCEPTION SCORES TO A NORMATIVE SCALE OF POOR, WEAK, AVERAGE, STRONG, EXCELLENT |
| :---: |
| **504** |

# FIG. 11

MEDIA FULL TEXT DATA ACQUISITION IS FIRST PERFORMED BY THE DATA ACQUISITION MODULE
**406**

⟋ **404**

↓

THE ACQUIRED DATA IS THEN CLEANED AND ENRICHED BY THE DATA CLEANING MODULE
**408**

↓

LOCATION OF THE ENTITY NAME FOR WHICH ESG PERCEPTION FROM MEDIA DATA IS SOUGHT, WITHIN THE ACQUIRED DATA, IS THEN DETERMINED
**410**

↓

DETERMINE LOCATION OF AT LEAST ONE ESG RELATED KEYWORD IN A MEDIA ARTICLE MENTIONING THE ENTITY FOR WHICH ESG PERCEPTION FROM MEDIA DATA IS SOUGHT, WITHIN THE ACQUIRED DATA
**412**

↓

THE DATA ACQUISITION MODULE IS PRE-PROGRAMMED TO FIND KEY WORD IN CONTEXT DATA WITH THE FOUND ESG RELATED KEYWORD AND EXTRACT THE ESG RELATED KEYWORD AND THE KWIC DATA WITH THUS KEYWORD
**414**

↓

THE KWIC DATA CONTAINING THE ESG RELATED KEYWORD, THE KEYWORD, AND ENTITY NAME ITSELF, IS THEN STORED WITHIN THE STORAGE DEVICE
**416**

↓

DATA ACQUISITION MODULE IS PRE-PROGRAMMED TO FIND KWIC DATA WITH THE FOUND ENTITY NAME AND/OR ENRICHMENT DATA AND TO EXTRACT THE ENTITY NAME AND THE KWIC DATA WITH THE ENTITY NAME AND/OR ENRICHMENT DATA
**418**

↓

THE ENTITY NAME AND/OR ENRICHMENT DATA KWIC DATA AND ENTITY NAME AND/OR ENRICHMENT DATA ITSELF, IS STORED WITHIN THE STORAGE DEVICE
**420**

↓

THE ESG PERCEPTION FROM MEDIA DATA ENGINE PERFORMS KWIC DATA ANNOTATION WITH KEYWORD-BASED SENTIMENT CLASSIFIED AS POSITIVE, NEGATIVE, OR NEUTRAL
**422**

↓

NLP MODEL TRAINING IS THEN PERFORMED WITH THE ANNOTATED DATA
**424**

↓

AN NLP TRAINED MODEL IS THEN SAVED TO THE STORAGE DEVICE
**426**

**FIG. 12**

ANNOTATION JOB INSTRUCTIONS ARE WRITTEN TO ALLOW THE
STORED KWICS TO BE CLASSIFIED BY THE MEDIA DATA MANAGEMENT
MODULE AS EITHER POSITIVE, NEGATIVE, OR NEUTRAL
**432**

430

QUALITY OF THE ANNOTATION JOB INSTRUCTIONS IS TESTED BY RANDOMLY
CHOOSING MULTIPLE ROWS OF DATA FROM A SELECTED DATASET OF KWIC DATA
FOR INITIAL ANNOTATION, AND UPLOADING THIS DATA FOR ANNOTATION JOB
INSTRUCTIONS QUALITY TESTING
**434**

THE SELECTED MULTIPLE ROWS OF THE SELECTED KWIC DATA ARE THEN
ANNOTATED AND A MACRO F1 SCORE IS CALCULATED FOR THE ANNOTATION
QUALITY TESTING
**436**

A DETERMINATION IS THEN MADE BY THE MEDIA DATA MANAGEMENT MODULE AS
TO WHETHER THE MACRO F1 SCORE SATISFIES A PREDEFINED THRESHOLD VALUE
**438**

IF THE DETERMINED F1 SCORE FOR THE ANNOTATED MULTIPLE ROWS OF THE
SELECTED KWIC DATA SATISFIES THE PREDEFINED THRESHOLD VALUE, THE
REMAINING ROWS OF THE SELECTED KWIC DATA ARE ALSO ANNOTATED
**440**

IF THE F1 SCORE DOES NOT SATISFY THE PREDEFINED THRESHOLD VALUE, THE
MEDIA DATA MANAGEMENT MODULE NOTES THE INCONSISTENCIES AND
INEFFECTIVENESS OF THE WRITTEN ANNOTATION JOB INSTRUCTIONS AND NEW
ANNOTATION JOB INSTRUCTIONS ARE WRITTEN
**442**

REPEAT BLOCKS 434, 436, AND 438

# FIG. 13

600

ESG RELATED KEYWORD-BASED SENTIMENTS PER KWIC DATA-POINT ARE
RETRIEVED FROM THE STORAGE DEVICE
**602**

AN ESG PERCEPTION RAW SCORE FROM MEDIA DATA IS THEN CALCULATED FOR THE
ENTITY BY USING THE SENTIMENTS PREVIOUSLY STORED OF THE ESG KEYWORD
KWICS FOR THE ENTITY, BY AGGREGATING ALL OF THE POSITIVE AND NEGATIVE
SENTIMENTS OF ESG KEYWORD KWICS OF THE ENTITY AND NORMALIZING THE
RESULT TO A 0 TO 100 SCORE
**604**

THE ESG PERCEPTION RAW SCORE FROM MEDIA DATA OF THE ENTITY THEN
HAS A WEIGHTING ALGORITHM APPLIED TO IT, WHERE THE WEIGHTING IS
BASED ON TEXT IMPORTANCE, AS MAY BE DETERMINED FROM THE MEDIA
DATA SOURCE, VOLUME, REACH, AND IMPACT
**606**

# FIG. 14

Europäisches
Patentamt

European
Patent Office

Office européen
des brevets

# EUROPEAN SEARCH REPORT

**Application Number**

**EP 22 15 7116**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/074294 A1 (LONG RYAN [US] ET AL) 5 March 2020 (2020-03-05) * paragraph [0024] – paragraph [0179] * * figures * | 1-16 | INV. G06Q30/02 G06N20/00 |
| X | US 2019/286676 A1 (FATZINGER LEIGH [US]) 19 September 2019 (2019-09-19) * paragraph [0020] – paragraph [0072] * * figures 1-11 * | 1-16 | |

**TECHNICAL FIELDS SEARCHED (IPC)**

G06Q
G06N

The present search report has been drawn up for all claims

| Place of search | Date of completion of the search | Examiner |
|---|---|---|
| The Hague | 17 June 2022 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 7116

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2022

| Patent document cited in search report | | Publication date | Patent family member(s) | | Publication date |
|---|---|---|---|---|---|
| US 2020074294 | A1 | 05-03-2020 | NONE | | |
| US 2019286676 | A1 | 19-09-2019 | US | 2019286676 A1 | 19-09-2019 |
| | | | WO | 2019178582 A1 | 19-09-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 17627121
- US 30639721
- US 51065621